(19)

Europäisches
Patentamt
European
Patent Office
Office européen
des brevets

(11) EP 2 177 898 A1

(12) EUROPEAN PATENT APPLICATION

(43) Date of publication:
21.04.2010 Bulletin 2010/16

(51) Int Cl.:
*G01N 21/88* (2006.01)

(21) Application number: 08017978.1

(22) Date of filing: 14.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Fraunhofer-Gesellschaft zur
Förderung der
angewandten Forschung e.V.
80686 München (DE)

(72) Inventors:
• Caulier, Yannick
  90766 Fuerth (DE)
• Spinnler, Klaus
  91058 Erlangen (DE)

(74) Representative: Hersina, Günter Siegfried et al
Schoppe, Zimmermann, Stoeckeler & Zinkler
Postfach 246
82043 Pullach (DE)

(54) **Method for selecting an optimized evaluation feature subset for an inspection of free-form surfaces and method for inspecting a free-form surface**

(57) A method for inspecting a free-form surface illuminated by a structured light comprises an illuminating step for illuminating an area of the free-form surface, a recording step for recording an image of the illuminated area and an evaluating step for evaluating each pixel or a subset of the pixels of the image with a combination of evaluation features for obtaining a defective or non-defective state of the surface area.

FIGURE 2

**Description**

Embodiments of the invention relate to a method for selecting an optimized evaluation feature subset for an inspection of free-form surfaces illuminated by a structured light and a method for inspecting a free-form surface illuminated by a structured light.

Embodiments of the invention are related to the fields of surface quality control by means of optical methods and to pattern analysis.

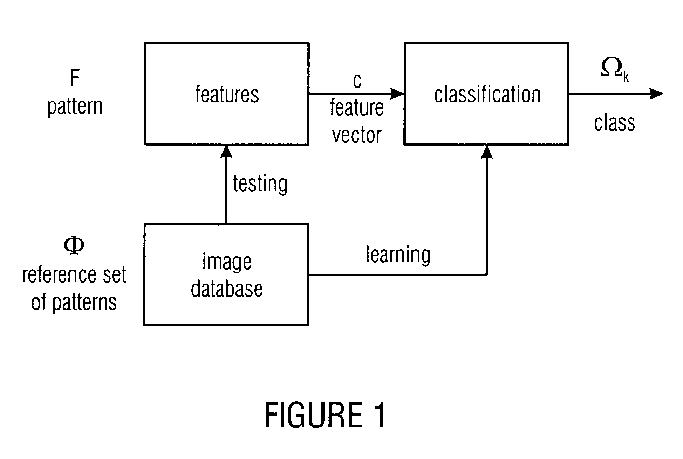

In **Fig. 1** a diagram of a conventional pattern analysis procedure is depicted. The pattern analysis procedure comprises a reference set Φ of image patterns to be classified separated in a learning set and a testing set. The former is used for the "teaching" of the classification algorithm, the latter is used for the classification evaluation. The core part of this procedure comprises the characterization of each pattern F to be classified by means of specific features.

For a classification two different approaches may be used: the Naive Bayes (NB) classificator and the Nearest-Neighbor (k-NN) classifier. There are two major reasons to use these two classifiers. First, both methods are based on two different classification models. The NB method is a probabilistic learner which makes the assumption that the feature distributions of each class can be described by a normal distribution. The k-NN is an instance-based prediction model as described by "Ian H. Witten and Eibe Frank, Data mining, Oxford 2005" (instance in the sense of pattern) which does not try to create "rules" but works directly on the patterns themselves.

Second, the NB classifier is often seen as a simple but powerful approach. This classificator often outperforms more sophisticated classifiers according to "Ian H. Witten and Eibe Frank, Data mining, Oxford 2005". The k-NN method is known to approach the results of the NB classifier in case of a large data set (as shown by "T.M. Cover and P.E. Hart, Nearest Neighbor Pattern Classification, EIII Trans. On Information Theory 13 (1967), no. 1, 21-27") as we have here in inspection of free-form surfaces. When the Bayes minimum probability of error of $p_B$ less than 1 is low following equation holds:

$$p_B \leq p_N \leq 2 \cdot p_B,$$

where $p_B$ is the minimum probability of error of the Bayes classificator and $p_N$ is the minimum probability of error of the Nearest-Neighbor decision rule.

Concerning the computational aspect of both classifiers, the k-NN classificator is more computational extensive as the NB classificator. Indeed, the NB model necessitates only a small set of parameters, that are estimated during the training procedure. These parameters define the probability function for each feature vector value for each class. The classification consists of assigning each observed feature vector $c^i$ of the test set to the most probable class according to the value of the probability function. For the k-NN, the number of operations required to classify a pattern $^iF$ is directly proportional to the number of elements in the training set. As for each $^iF$ of the test set, the distance to every member of the training set must be calculated.

For the description of both classifiers, let C be a vector of random variables denoting the observed features and $^ic$ be the $i^{th}$ observed feature vector (i = 1, .., $N_F$ ). $^ic(k)$ is the $k^{th}$ value of the observed feature vector $^ic$, k = 1, ..., $N_c$. Further, let $\Omega_K$ be a random variable denoting the class of a feature $\Omega_K \in \{\Omega_1, \Omega_2, \Omega_3\}$.

NB is a probabilistic learner based on Bayes' rule. This classifier is termed naive because it relies on the important simplifying assumption that the predictive features are conditionally independent.

According to Bayes' rule (see "R.O. Duda and P.E. Hart, Pattern classificatzion and scene analysis, Wiley, New York, 1973", the a-posteriori probability $p(\Omega_K|C=^ic)$ of each class $\Omega_K$ given the $i^{th}$ vector of observed values $^ic$ is

$$p(\Omega_\kappa|C =^i c) = \frac{p(\Omega_\kappa).p(C =^i c|\Omega_\kappa)}{p(C =^i c)}.$$

Following the Naive Bayes simplification, which states that the conditional probabilities are independent, one obtains following conditional probability:

$$p(\mathbf{C} =^{i} \mathbf{c}|\Omega_{\kappa}) = \prod_{k=1}^{N_c} p(^{i}C(k) =^{i} c(k)|\Omega_{\kappa}).$$

The values of the observed feature vector $^{i}c$ are numeric. With the assumption that within each class label $\Omega_K$, these feature values are normally distributed, one can fully represent such a distribution in terms of its mean and variance.

The k-NN technique assigns an observed feature vector $^{i}c$ from the test set to the class label $\Omega_K$ of the majority of its k-Nearest-Neighboring patterns from the training set using a distance criteria. The Euclidian distance or the city block metric are typical distance criteria. The Nearest-Neighbor approach can also be written according to the estimated a-posteriori probability as follows:

$$\hat{p}(\Omega_{\kappa}|\mathbf{C} =^{i} \mathbf{c}) = \frac{m_{\kappa}}{m},$$

where $m_k$ is the number of patterns with class label $\Omega_K$ in the neighborhood of the observed feature vector $^{i}c$ and m is the total number of patterns in the same neighborhood. The Nearest-Neighbor decision rule is independent of the joint distribution of the sample points.

Two different classification methods (Learning) may be used: a stratified 10-fold cross validation 10-F and a leaving-one-out cross validation classification LoO.

The 10-F method divides the reference data set $\Phi$ into 10 parts, in which each of the e.g. three classes $\{\Omega_1, \Omega_2, \Omega_3\}$ is represented in the same proportion than in the full dataset $\Phi$. The learning procedure is executed ten times. Each time the training is done on the remaining 9/10 of the dataset. Finally, the ten estimated classification rates are averaged to yield the final classification rate $C_P$, expressed in percent. $C_P$ is the rate of correctly classified patterns belonging to the three classes $\{\Omega_1, \Omega_2, \Omega_3\}$. The LoO is simply a $N_F$-fold cross validation, where $N_F$ is the number of patterns of dataset $\Phi$. This method consists of classifying each of the $N_F$ patterns where the $N_F$ - 1 remaining patterns are used for the training step.

For the selection of the training and the testing samples from dataset $\Phi$, their size and their representativeness will be considered. Therefore, each of the involved classification methodologies has following advantages.

In case of the 10-F method, the stratification process guarantees the representativeness of each class in the training and testing sets. Further, this procedure mitigates any bias caused by the random sampling of dataset $\Phi$ by repeating the training and testing several times. Ten times sampling may be referred to as the right number of folds to get the best estimation error. One major advantage of the LoO procedure is that the greatest possible amount of data is used for the training step. Another benefit is that no random sampling is involved.

The learning and evaluation process of the classification method are done using an annotated reference image database $\Phi$. The classical procedure uses a first set of the reference patterns for training purposes of the classification algorithm. The second reference set of patterns is used for the evaluation of the classification algorithm by comparing the true-state with the detected state. One necessity for a classification problem is to collect enough information on the patterns to classify, i.e. to have a representative reference set $\Phi$ of patterns. $\Phi$ is made of $N_F$ elements and is described as follows:

$$\Phi = (^{1}\mathbf{F}, ..., ^{N_F}\mathbf{F}) \in \Omega$$

It is of course preferable to have a huge and representative set $\Phi$ of reference patterns, as the goodness of a classificator depends on its ability to collect enough information on the patterns F to classify. $\Phi$ can be considered to be representative, if the computed feature vector c defines all patterns $F \in \Phi$.

The classification procedure then consists of assigning a class $\Omega_k$ to each pattern F according to the corresponding feature vector c.

As each classification result of the vision system provokes a determined action, each decision is coupled with a specific cost. Mathematically speaking, this is equivalent to define the cost values $r_{\lambda K}$ for each pair of classes $\Omega_\lambda | \Omega_K$ among the $N_k$ classes, as follows:

$$r_{\lambda\kappa} = r(\Omega_\lambda | \Omega_\kappa) \quad \lambda = 1, \cdots, N_k, \quad \kappa = 1, \cdots, N_k$$

$$0 \le r_{\kappa\kappa} < r_{\lambda\kappa}, \quad \lambda \ne \kappa$$

The costs $r_{\lambda K}$ are generated when a pattern F is wrongly classified in a class $\Omega_\lambda$ although it belongs to class $\Omega_K$. Costs for false classification will logically be higher than good classification costs.

The classification procedure can therefore be considered as an optimization process, where the task is to classify each image pattern F by means of its corresponding feature vector c in such a way that the average costs are minimized. The optimal classificator minimizes the value $u_\lambda(c)$, defined as follows:

$$u_\lambda(c) = \sum_{\kappa=1}^{N_k} r_{\lambda\kappa} p_\kappa p(c|\Omega_\kappa) \quad \lambda = 1, \cdots, N_k$$

$p_K$ is the probability of occurrence of class $\Omega_K$, $p(c|\Omega_K)$ is the conditional probability that the vector c is computed and the corresponding pattern F belongs to the class $\Omega_K$.

The cost values are task dependent and are assigned in accordance with the requirements of the inspection process. The probabilities are computed directly from previously collected data. If the estimated probability of occurrence $p_K$ is relatively easy to retrieve, as it expresses the proportion of patterns of class $\Omega_K$ among all patterns, the estimated conditional probability $p(c|\Omega_K)$ and also the estimated density distribution are more complex to compute.

The first possibility is that the distributions of c follow known models. Then, the task consists of determining the parameters of these models from the values of c. This is called the parametric approach. As an example, for the Poisson and the Gauss distributions, one and two parameters are estimated from the observed pattern. But when no model fits to the distributions of c, a non parametric approach may be necessary, in such a way that the density distributions are estimated without a-priori knowledge of the form of the observed distributions. A solution is to apply the Parzen algorithm or the Gaussian mixture models to estimate these densities.

Extraction and discrimination of the image features are parts of a conventional classification process which consists of the three components depicted in Fig. 1: feature extraction, learning and classification procedure. In this way, the pattern analysis consists of the extraction of some relevant information, its treatment and its interpretation. The feature extraction process addresses the extraction of all relevant characteristics describing an image pattern F, which are collected into a feature vector c. The depicted information in the image pattern can be of any type and wood, walls, tissues, grass, clouds, etc. are just a few examples. The feature values may be considered to correspond directly to the pixels of the image pattern, so that F = c. This is one possible approach for surface classification as the image pattern contains all necessary relevant information. But processing this huge amount of data requires more computational effort and a lot of memory, so that an intermediary feature extraction step is preferable.

Once a feature vector c has been computed, the whole classification process can be optimized using combinatorial optimization procedures also which are feature selection procedures. Their purpose is to retrieve the $Nc_{sub}$ best features of subset $c_{Sub}$ from the $N_c$ features of c, $c_{sub} \in c$.
The branch-and-bound and the genetic algorithms are two possible approaches. Two types of methodologies are used. The first consists of minimizing or maximizing distance values of feature inter- and intra- repartitions. The second consists in minimizing false rates probabilities obtained with a classificator.

The most optimal feature set retrieval is done within the context of the industrial computer vision process. Such a classification procedure is made of different steps starting with the recording of the surface to be inspected and ending with the final classification result. Following three major steps are considered: the segmentation of the defects to be interpreted, their characterization and their interpretation. The aim is to reach optimal classification results.

Concerning conventional visual inspection techniques dedicated to the visual enhancement of defective surface parts situated on free-form objects, two major approaches may be distinguished to review different types of defective surfaces as two-dimensional textural or three-dimension depth defect, for example. The first approach uses a diffuse illumination to review textural defects and the second is based on the three-dimensional triangulation technique to recover the depth information. The major drawback of the former approach is that some depth defects cannot be visually enhanced, whereas the main drawback of the latter is that the recover of the depth defects is based on a preliminary calibration process of the whole recording setup, i.e., the recording sensory and the structured illumination.

In case of the simultaneous enhancement of different defective surface parts on free-form geometries, different techniques are proposed in the literature whether these are used as laboratory setups or industrial suitable systems.

A first possibility is provided by "Ingo Reindl, Optical Configurations, Methods and Algorithms for the Automatic Inspection of Metallic Surfaces, PhD Thesis, University of Leoben, Austria, 2006" who uses the light sectioning technique for the inspection of planar steel block probes in an industrial process. In this case, the intensity of the reflected light rays is used to recover the geometrical surface defect as cracks and to determine textural defects.

A technique to reliably retrieve the edges and the texture of metallic objects is proposed by "F. Puente Leon, and J. Beyerer, Active vision and sensor fusion for inspection of metallic surfaces, Intelligent Robots and Computer Vision XVI, Algorithms, Techniques, Active Vision and Materials Handling, D.P. Casasent (ed.), Proc. Of SPIE, 3208, 394-405, 1997". This method is based on the fusion of different images of the same object recorded with varying illumination directions.

However, the recording conditions of both approaches are not optimal in terms of a real time industrial inspection process. The first method implies the use of two cameras and does not propose a generalization to free-form surfaces, only the case of planar surfaces is addressed. With the second method, the whole inspected surface must be recorded several times, which is hardly applicable in an online inspection process.

With the same purpose of simultaneously enhancing various defective surfaces, different automatic inspection systems have been recently proposed. The firm Aceris "Aceris 3D, FC Substrate Bump Inspection System, Product documentation, Clark Graham 300, Baie D'Urfe, Quebec, Canada, 2005" proposes a combined 3D laser technique with a 2D color approach for the measurement of electronic devices. In the same manner, a combined 3D computer tomography technique and a 2D X-Ray sensor have been merged into one system by the firm Comet "Comet AG, Feinfocus Fox, High Resolution 2D/3D, Product documentation, Herrengasse 10, 31775 Flamatt, Switzerland, 2005". The purpose is also the inspection of electronic devices. The firm "Solvision, Precis 3D, Wafer Bump Inspection Solution, Product documentation, Solvision 50 De Lauzon, Suite 100, Boucherville, Quebec, Canada, 2007" proposes a wafer inspection system which integrates a 3D structured lighting combined with the 2D images of the surfaces.

Major disadvantages of such methods are that they combine two different illumination techniques.

With the same objective of increasing different defect types with one system, an alternative surface inspection procedure has been proposed in the patent "Yannick Caulier, Klaus Spinnler, Robert Couronne, Beleuchtungsvorrichtung für zylindrische Objekte, damit durchgeführtes Oberflächenuntersuchungsverfahren und Computerprogrammprodukt. Patent DE 10 2006 008 840.9, Fraunhofer Institut für Integrierte Schaltungen, 2006". It has been demonstrated that different defective surface types can be visually enhanced by means of a specific illumination based on the projection of a stripe pattern. The image patterns have a typical vertical and periodical structure whose disturbances are related to the surface type, i.e., to the defective surface being recorded. The case of textural 2D and geometrical 3D defects on specular cylindrical surfaces has been addressed. The proposed technology can be used in real-time inspection processes, as the patented application is used in a 24 hours/7 days production line.

One major limit of the proposed method of DE 10 2006 008 840 is that it is dedicated to the inspection of particular surface geometries and types, i.e., cylindrical and specular objects. Indeed, the illumination was specially designed for such object types and the stripe pattern interpretation algorithms were basically developed for the characterization of vertical and periodical stripe structures.

Recording principles of specular reflecting free-form surfaces and methods for recording are described by "Sören Kammel, Deflektometrische Untersuchung spiegelnd reflektierender Freiformflächen, PhD Thesis, University of Karlsruhe (TH), Germany, 2004", which methods, however, may not be applied to rough surfaces.

While the patent DE 10 2006 008 840 describes vertical and periodical stripe structures for characterization of a surface, further types of features are proposed within the textural analysis community "M. Tuceyran, Texture Analysis, World Scientific Publishing Co. 2nd edition, 207-248, 1998". Depending on the selected features and on the kind of surface, different detection rates may be achieved.

The patent DE 10 2006 008 840 is restricted to cylindrical objects with an illumination and associated algorithms specially adapted to cylindrical objects. The methods described in this patent may not be used for similar systems which use this special kind of stripe illumination (to visually enhance and detect the errors) for detecting other surface geometries, for example planar surfaces.

In DE 10 2006 008 840 the projected rays of light comprising the stripe pattern is adapted to the object, such that a periodical pattern is mapped to the image of the camera.

Methods for describing surface information which is directly acquired by the stripe pattern are described in the context of interferometric methods using coherent light, for example by "Huang Zhi and Rolf B. Johansson, Interpretation and Classification of Fringe Patterns, 11th Int. Conference on Image, Speech and Signal Analysis (IAPR'1992), August, 105-108, 3, 1992" or "Xide Li, Wavelet Transform for Detection of Partial Fringe Patterns Induced by Defects in None Destructive Testing of Holographic Interferometry and Electronic Speckle Pattern Interferometry, Journal of Optical Engineering, October, 2821-2827, 39, 2000". These methods, however, always use one type of feature, for example, an adaptive feature or a wavelet feature or others.

In this context, there is a need for a simple method for inspecting free-form surfaces with respect to a low computational complexity and a simple and cheap illumination and recording method.

Embodiments of the invention provide a method for selecting an optimized evaluation feature subset for an inspection of free-form surfaces illuminated by a structured light on the basis of a reference set of patterns depicting surface areas of free-form objects, wherein each pattern of the reference set is associated to a defective or non-defective reference state of the respective surface area of the free-form objects. The method comprises generating a plurality of combinations of evaluation features wherein each combination of evaluation features comprises a first set of features and a second set of features, wherein the first set of features is selected from a first group of adaptive features and wherein the second set of features is selected from a second group of textural features, wherein the first group of adaptive features comprises stripe-based features and/or fringe-based features and wherein the second group of textural features comprises transform-based features, structural features and/or statistical features. The method further comprises evaluating each pixel or a subset of the pixels of the patterns of the reference set with each combination of evaluation features for obtaining an evaluated defective or non-defective state of the respective surface areas. The method further comprises comparing the evaluated defective or non-defective state with the defective or non-defective reference state for obtaining a detection rate for each combination of evaluation features. The method further comprises determining the optimized evaluation feature subsets based on the detection rates.

Embodiments of the invention further provide a method for inspecting a free-form surface illuminated by a structured light. The method comprises illuminating an area of the free-form surface by the structured light. The method further comprises recording an image of the illuminated area of the free-form surface. The method further comprises evaluating each pixel or subset of the pixels of the image of the area of the free-form surface with a combination of evaluation features for obtaining a defective or non-defective state of the surface area, wherein the combination of evaluation features comprises a first set of features and a second set of features, wherein the first set of features is selected from a first group of adaptive features and wherein the second set of features is selected from a second group of textural features, wherein the first group of adaptive features comprises stripe-based features and/or fringe-based features and wherein the second group of textural features comprises transform-based features, structural features and/or statistical features.

The stripe-based features comprise geometry-based features, intensity-based features and statistic-based features. The fringe-based features comprise geometry-based features, intensity-based features and statistic-based features.

The transform-based features comprise Fourier-based features and Wavelet-based features.

Embodiments of the invention do not require a periodic stripe pattern, it is sufficient to project any kind of structured light, for example any kind of stripe pattern. A selection of methods for generating stripe patterns is not limited to a special method or a special technique for illuminating the surface. A large number of various objects with different geometries and surface types may be inspected by the structured light according to embodiments of the invention. The illumination does not need to be adapted or adjusted to the object to receive a periodic pattern in the image of the camera. The image of the camera having recorded the stripe pattern of the illuminated surface of the object bears information about errors in the surface of the object. Errors may be detected if variations or distortions of the pattern caused by errors in the surface of the object may be differentiated from a pattern being recorded of the image of an error-free surface.

The illumination method may use non-coherent light. In this case conventional stripe pattern generation methods may be applied, for example a projector for projecting stripes on a matt surface or a projector for projecting stripes on a screen which stripes were reflected from a specular surface. Also an LCD display for displaying stripes of a specular surface may be utilized.

Embodiments of the invention, however, are not restricted to using non-coherent light. They may also illuminate with coherent light for the generation of interference patterns. Embodiments of the invention are not limited in recording the image to a special recording method, e.g. requiring a special recording position of the object or/and the camera. Embodiments of the invention offer a larger choice of recording methods, for example line scan cameras, matrix cameras or line scan sensors without restricted positions with respect to the object or/and the illumination. The only restriction is that the sensor, the projected stripe pattern onto the sensor and the surface have to be positioned in such a way that a stripe structure can be observed in the images.

Embodiments of the invention address the inspection of a broad range of surfaces types, i.e., matt to specular, and of various geometries (free-form surfaces) in order to simultaneously or nearly simultaneously enhance different defective surface types, for example two-dimensional textural or three-dimensional depth defects.

Advantages of embodiments of the invention in comparison to conventional techniques are their simplicity and their generalized approach.

Not more than one camera and one illumination is required to characterize the surfaces. Furthermore, no complicated calibration processes are necessary to compute the position of the camera or of the illumination, as this is the case in conventional three-dimensional depth recovery techniques.

Embodiments of the invention allow to simultaneously discriminate different types of defective surfaces with only one illumination. Textural two-dimensional and geometrical three-dimensional defects may be detected.

Errors may be detected if the defective surfaces to be characterized induce stripe deformations that are distinguishable from the non-defective surfaces.

In contrast to DE 10 2006 008 840, where the algorithm is adapted to the illumination and recording position in order to generate a special image, such a requirement is not necessary for embodiments of the invention.

A LCD display, displaying stripe patterns could replace the special developed illumination of DE 10 2006 008 840. The camera would record the projected stripe pattern on the display. However, by using the LCD display, the recorded stripe pattern would have a different structure, i.e., a not periodical structure. This would directly influence the algorithmic evaluation, such that the classification procedures proposed in DE 10 2006 008 840 would no longer be sufficient to classify all types of errors. Embodiments of the invention provide an evaluation of stripe patterns, even if the patterns are non-periodical. Embodiments of the invention provide a (nearly) simultaneously detection and differentiation of different types of errors. By a combination and a selection of features, embodiments of the invention provide better classification results than conventional classification algorithms. The advantage of such an approach of combination and selection is a higher degree of generalization, i.e., embodiments of the invention are better suited to generalize tasks. Depending on the inspection task, the kind of stripe pattern to be classified will change and by this the relevant features will change. By embodiments of the invention using a combination and selection of features, a manifold number of stripe patterns may be classified resulting in improved detection rates.

Embodiments of the invention provide a combination of different feature types, which may be differentiated by two classes, one adaptive class optimized for stripe patterns and one general class optimized for textural analysis methods.

The surface types of the (free-form) object can be manifold. The inspection of matt to specular surfaces are addressed by embodiments of the invention.

Embodiments of the invention provide a surface quality control by means of one optical sensor element, for example a matrix or a line scan camera, and one structured illumination, which is also called "stripe illumination", as a periodical bright and dark pattern is projected onto the surface to be inspected.

By means of a specific algorithmic procedure, the depicted defective surface parts can be automatically characterized. The characterization can be done using the time domain, i.e. the value and the repartition of the pixel values of the image, or the frequency domain, i.e. the spectral response of the image to be characterized. Embodiments of the invention can also be used in automatic inline surface inspection processes.

With reference to the accompanying Figs. 1 to 10, embodiments of a method for selecting an optimized evaluation feature subset for an inspection of free-form surfaces and embodiments of a method for inspecting a free-form surface illuminated by a structured light will be described.

**Fig. 1**    shows a diagram of a conventional pattern analysis procedure;

**Fig. 2**    shows a diagram of a method for inspecting a free-form surface illuminated by a structured light according to an embodiment of the invention;

**Fig. 3a**    shows a schematic diagram of an inspection method of free-form surfaces illuminated by a structured light according to an embodiment of the invention;

**Fig. 3b**    shows two exemplary recordings of a free-form rough and a free-form specular surface according to an embodiment of the invention;

**Fig. 4**    shows two embodiments of camera-light-object geometries according to embodiments of the invention;

**Fig. 5a**    shows a recording of a planar structure with a 3D-defect on the left end a 2D-defect on the Right according to an embodiment of the invention;

**Fig. 5b**    shows a recording of a plastic tube with one 3D-defect and a font according to an embodiment of the invention;

**Fig. 6**    shows a reference set of patterns comprising three considered stripe image data sets $\Phi_0$, $\Phi_1$ and $\Phi_2$ according to an embodiment of the invention;

**Fig. 7**    depicts a reference set of patterns comprising a pattern set of adapted size and two pattern sets of fixed sizes according to an embodiment of the invention;

**Fig. 8**    shows a structural tree comprising features to be combined for applying a combination of these features for classifying an image according to an embodiment of the invention;

**Fig. 9** shows a diagram of a method for selecting an optimized evaluation feature subset for an inspection of free-form surfaces illuminated by a structured light; and

**Fig. 10** shows a diagram depicting detection (classification) rates of different combinations of evaluation features according to an embodiment of the invention.

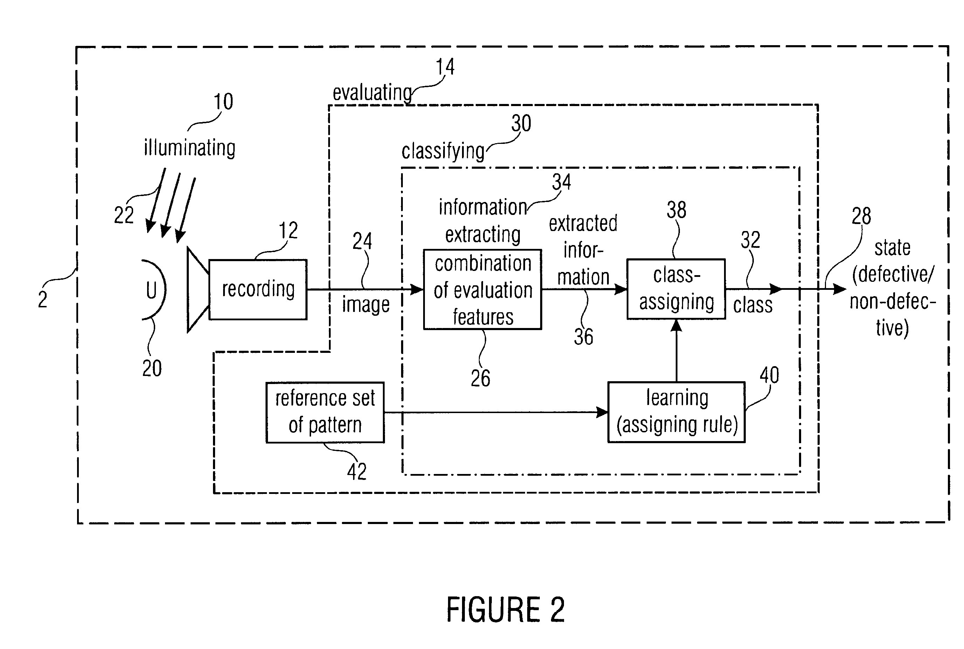

**Fig. 2** shows a diagram of a method for inspecting a free-form surface illuminated by a structured light according to an embodiment of the invention.

The method 2 comprises a first step 10 with "illuminating an area of the free-form surface 20 by the structured light 22", a second step 12 "recording an image 24 of the illuminated area of the free-form surface 20" and a third step 14 "evaluating each pixel or a subset of the pixels of the image 24 of the area of the free-form surface 20 with a combination of evaluation features 26 for obtaining a defective or non-defective state 28 of the surface area 20, wherein the combination of evaluation features 26 comprises a first set of features and a second set of features, wherein the first set of features is selected from a first group of adapted features and wherein the second set of features is selected from a second group of textural features, wherein the first group of adapted features comprises intensity-based features, geometry-based features and/or fringe-based (or adaptive fringe) features and wherein the second group of textural features comprises transform-based features, structural features and/or statistical features".

The third step 14 comprises a classifying 30 the image 24 by assigning a class 32 to the image 24, which class 32 is indicating the defective or non-defective state 28 of the surface area 20.

The classifying 30 comprises a first step 34 "extracting information of the image 24, which is described by the combination of evaluation features 26 to an extracted information 36" and a second step "assigning 38 the class 32 to the image 24 by using the extracted information 36", wherein the assigning 38 of the class 32 to the image 24 is based on an assigning rule 40, which is derived from a reference set of patterns 42 depicting surface areas of free-form objects, wherein each pattern of the reference set is associated to a reference class.

The assigning 38 the class 32 to the image 24 may comprise a filter algorithm or a wrapper algorithm. The filter algorithm may comprise a correlation-based algorithm, the wrapper algorithm may comprise a Nearest-Neighbor algorithm or a Naive-Bayes algorithm.

The assigning 38 the class 32 to the image 24, based on an assigning rule 40, may comprise a learning, adjusting, setting or optimizing method.

The assigning rule 40 may comprise a stratified 10-fold cross validation algorithm or may comprise a leaving-one-out cross validation algorithm.

The reference set of patterns 42 may comprise patterns of adapted size or patterns of fixed size. The reference class may comprise a class of non-defective surfaces, a class of 2D-defective surfaces and/or a class of 3D-defective surfaces. The reference class may further comprise a class of planar-shaped surfaces, a class of surfaces shaped by a perspective distortion and/or a class of surfaces shaped by a cylindrical distortion. Examples of the different reference patterns 42 and their assignment to reference classes will be given in the subsequent Figure descriptions.

The free-form surface 20 may have a matt surface or a specular surface, the structured light 22 may comprise stripe structures, periodical structures or vertical structures of visible, non-coherent light, for example. The illuminating 10 may be a structured illumination using coded-light for example. The recording 12 may use a line scan camera, or a matrix camera.

The "Features" block and the "classification" block of Fig. 1 may correspond to the "Classifying" 30 step as depicted in Fig. 2. The feature vector c may correspond to the "extracted information". The Pattern F may correspond to the image 24 and the "Features" may correspond to the Combination of Evaluation features 26 as depicted in Fig. 2. The class $\Omega_K$ may correspond to the class 32. The reference set $\Phi$ of image patterns may correspond to the reference set of patterns 42.

The considered patterns do not have to be vertical or periodical. For high detection rates the defective surfaces should induce different kind of stripe deformations than those provoked by the geometry of the surface.

A stripe pattern characterization can be fulfilled by means of intensity-based and geometry-based features, but also by means of further types of features, for example by a textural feature analysis. It is not possible to consider all existing feature-based image content description methods in case of the free-form stripe pattern characterization. Some embodiments of the invention restrict the characterization of the free-form stripe images by considering the intensity-based and geometry-based features $F^S$, Fourier-based features $F^F$ and their combination $F^{SF}$. These three feature sets will be denoted $F^S$, $F^F$ and $F^{SF}$.

The primary condition to evaluate the method for the characterization of free-form surfaces is to define an image database, i.e. a set of reference free-formed stripe image patterns 42. Such regular patterns are only a part of the stripe structures that would be depicted in case of free-form surfaces. Further pattern structures will, therefore, be defined. The easiest and simplest way is to use existing patterns obtained by means of an illumination of planar surfaces and to transform or adapt them, so that these can be used for the characterization of free-form surfaces.

Classification is the last step of the computer vision process. After defining the appropriate lighting, choosing the best recording imagery hardware, automatically segmenting the defective region in the whole image F of the surface to inspect and extracting the most relevant features to fill the vector c, the considered surface is classified in a predefined class.

The following notations will be used. U is assumed to be the set of all different measurable physical signals. Since pattern recognition usually deals with only one type of signal, the task can be defined in a more restricted way. Thus the set includes all possible patterns F which can be produced by a sensor. Task of an automatic inspection system is now to classify each pattern F in an appropriate corresponding class $\Omega_k$ among the $N_k$ defined classes.

$$\bigcup_{\kappa=1}^{N_k} \Omega_\kappa = \Omega \quad \text{with} \quad \Omega \in U$$

The number of classes $N_k$ a system may discriminate, depends on the inspection task and should be less than the number of realizations of F.

All components of the stripe image classification procedure are parts of a directed and hierarchical dataflow whose primary information source is the numerical image sensor data and final information is the classification result $\Omega_k$. The processing chain is depicted in Figure 2.

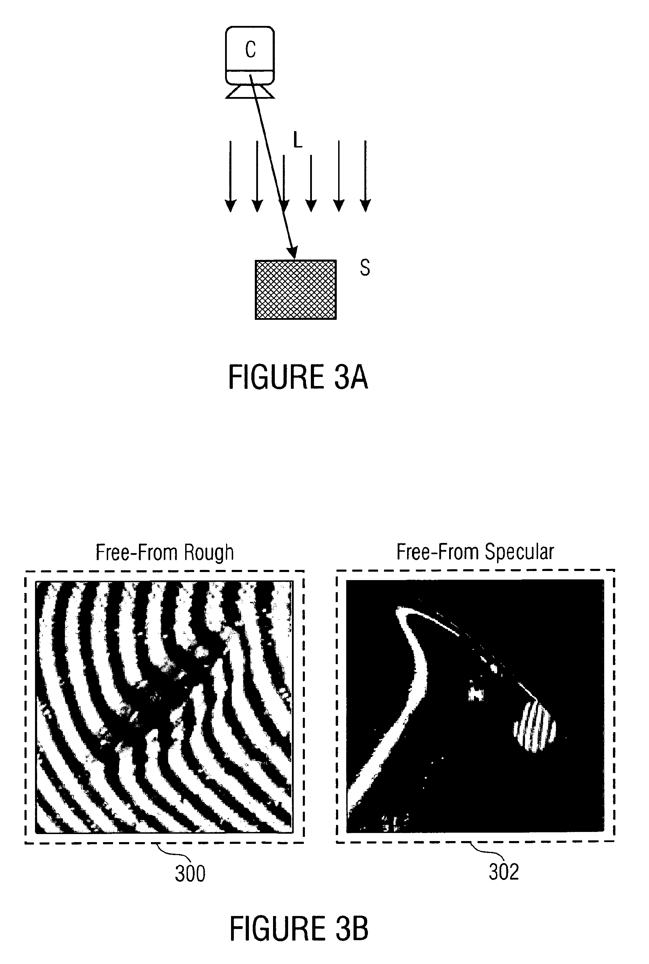

**Fig. 3a** shows a schematic diagram of an inspection method of free-form surfaces illuminated by a structured light and **Fig. 3b** shows two exemplary recordings of a free-form rough 300 and a free-form specular 302 surface. Fig. 3a schematically describes the surface inspection principle and Fig. 3b the recorded stripe patterns, which are produced when a stripe pattern is projected onto the surface to be inspected.

The case of free-form matt and specular surfaces is addressed. In Fig. 3a the surface inspection principle is illustrated: a camera C records the object surface S to be inspected, illuminated by an illumination L. No special requirements are formulated to a relative position of camera C and object surface S. Fig. 3b shows recordings of one free-form rough surface 300 and one free-form specular surface 302, both are illuminated by a structured light pattern. Both defective 3D-depths defects as depicted in Fig. 3b can be visually enhanced by means of the depicted bright/dark structures in the images.

The method comprises a characterization of free-form stripe structures, which are produced when a stripe pattern is projected onto the free-form surface to be inspected. No calibration procedure of the recording setup, i.e. neither the position of the recording camera nor the geometry of the protected stripe pattern have to be computed.

These two images depicted in Fig. 3a and 3b are just examples of the functionality of the inspection method. To achieve high detection rates the stripe disturbances induced by the object geometry should be different to the stripe disturbances induced by the defective surface to be detected.

Surface defects are very manifold as they can show different types of roughness, 2D textural defects, different types of structure, 3D structural defects, or a combination of both. The choice of the illumination(s) and sensor(s) is therefore of major importance.

One essential part of non-destructive surface inspection techniques working in the visible light domain is the task-specific illumination, allowing an enhancement of defective surfaces without an amplification of non-defective surface regions. From photography it is known that at least two complementary illumination technologies are used to depict different types of defects. As far as structural or textural defective surfaces have to be enhanced, a directed illumination to enhance the former defects or a diffuse illumination to reveal the latter defects is desirable.

The application of structured illumination techniques serves in general to retrieve depth information of a scene, yielding a three-dimensional reconstruction, i.e. to recover the shape of an observed object. The most common method of structural illumination is the projection of a certain pattern of structured light in such a way that the knowledge of the projected pattern combined with the observed deformation of the structure on the object surface permits the retrieval of accurate depth information of the scene. This method can further be improved by using more complex patterns, such as encoded light, color-coded light, or Moire projection. The principle of all these methods is the combination of three-dimensional information obtained by one or several calibrated cameras with information contained in the depicted disturbances of the projected light pattern. In contrast to these solutions, a further reconstruction method of shapes in the scene with only one stripe pattern and one camera by computing the surface normal may be applied. The set-up elements are the structured illumination projector, the recording camera and the scene to reconstruct. From the calibrated elements and the illuminated scene, the surface normal vectors may be computed. Then, the complete surface shape may be reconstructed.

Contrarily, a diffuse illumination technique is used when object surfaces have to be inspected with respect to their texture. Aim of this illumination is to reveal different surface types differing from their roughness and/or their color. The former influences the image brightness of the depicted surfaces whereas the latter affects the type and the intensity of the color. The choice of using grey, e.g. for automatic inspection of paper or metallic surfaces, or color, e.g. for integrity inspection of food articles or wood surface inspection images, depends on the application task.

In industrial inspection and quality assurance workflows, the main task of a human inspector is to visually classify object surfaces as non-defective or as defective. Since such visual inspection tasks are usually very tedious, tiresome and time consuming, machine vision systems are applied more and more for the automatic inspection. The two major constraints imposed by an industrial inspection process are the high quality and the high throughput of the objects to analyze.

The choice of an illumination technique is strongly motivated by the inspection task. An appropriate lighting is all the more important as it represents the first element of a machine vision workflow. Inspection systems of metallic industrial workpieces involve manifold illumination techniques.

There are two different quantitative approaches to reveal both textural and structural defects on metallic surfaces. Quantitative in this context means that the defective surfaces are detected and not measured, as it is the case for qualitative applications.

The first approach uses retro-reflective screens to reveal deflections of reflective surfaces. This technique has the advantage of enhancing both kinds of defective surfaces (textural and structural) but with the drawback that both have similar appearances in the images so that they cannot be discriminated afterwards.

The second approach necessitates at least two different illumination techniques. A dual sensor for recording object surfaces with a diffuse and a direct light in the same time may be used for this purpose. By an appropriate technique more than two images of the same object recorded with different lighting techniques can be fused in only one image. The major disadvantage of those approaches is of course that they necessitate more than one illumination. The direct consequence is that their integration in the industrial process is more complex and that the data processing chain will become extensive.

In order to address the proposed structure illumination based inspection task with a general approach, different types of stripe geometries will be considered. Such stripe geometries can be obtained by means of different surface shapes, structured light positions or sensor type. It is not possible to enumerate all combinations of these components and to compute the corresponding stripe geometries. Hence, in order to show the generalization effect of embodiments of the invention based on the direct interpretation of stripe patterns, it is preferable to demonstrate the principle of the method using a predefined number of stripe deformations. Moreover, such deformations may be observable in case of rough and specular surfaces.

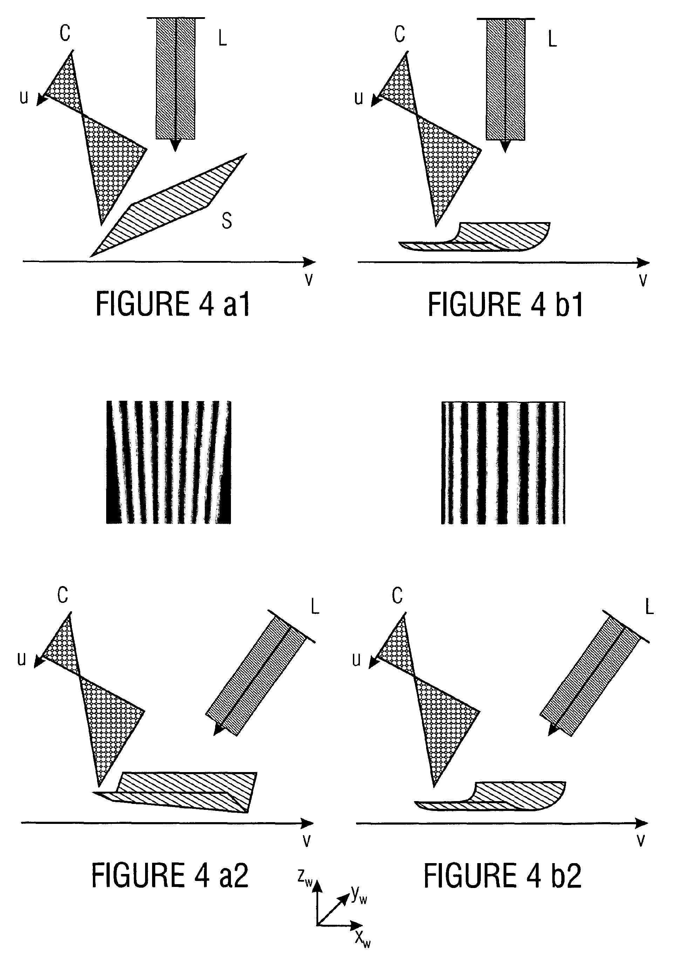

For this purpose two examples of bright/dark geometries are depicted in Fig. 4. Each geometry can be obtained when a rough or a specular surface is inspected. The case of a linear moving object recorded with a line scan camera is considered.

**Fig. 4** shows two embodiments of camera-light-object geometries according to embodiments of the invention. The figure depicts two different examples of stripe deformations arising when "a1" and "b1" free-form rough or "a2" and "b2" free-form specular objects are recorded. These two examples show that depending on the surface geometry, similar stripe deformations can be observed for rough or specular objects. They also illustrate the inspection of a surface S illuminated by an illumination L being recorded by a line scan camera C during its linear movement along v.

The case of line scan cameras is addressed in Fig. 4, however, this does not restrict the application of the surface inspection principle according to embodiments of the invention, as the same patterns can be obtained when matrix cameras are used.

On the basis of these two examples depicted in Fig. 4, it can be demonstrated that it is possible to obtain the same stripe patterns for specular and rough surfaces. Hence, the same reference stripe patterns can be used for the characterization of such kind of surfaces.

Further embodiments of the invention comprise an automatically processing of the stripe images in order to characterize their contents. Purpose of such an automatic procedure is to automatically classify the image for the quality control of the objects to be inspected.

The appropriate recording technique of an inspection system is imposed by the requirements of the inspection task. Hence, the number and type of necessary sensors depends on the scene to inspect (immobile or mobile with varying speed), the geometry of the recorded object (planar or free-form surfaces) or the task (surface inspection or depth recovering).

Line-scan and matrix cameras are the most used sensor geometries in machine vision systems working in the visible domain of light. If the former necessitate a movement of the camera and/or the scene, as e.g. in the web inspection or in the airborne photogrammetry, the latter are generally used for static scenes recording and remain the most described camera technique in literature.

Line-scanning sensors are adequate when long objects with a constant velocity are recorded. In opposition to matrix cameras, line-scan cameras have a one-dimensional sensor so that objects are recorded piecewise. This recording principle implicates a relative movement of sensor and object. To avoid additional recording distortions it is preferable to have a constant relative speed e.g. by coupling the external trigger of the camera with the speed of the objects. In the extreme case, e.g. in the airborne imagery, when the recording camera follows a random path, the relative position of the sensor can be rectified with the data of a global positioning system.

Since depth recovering can be done using one camera coupled with a specific illumination, another alternative is to use two or more cameras recording the same scene. This stereo or multiple vision technique can be applied to both matrix or line-scan sensors. Additionally, a further possibility for scene 3-D reconstruction is to use images from a moving camera, the so-called "structure from motion" principle. Some specific cameras offer the possibility to compute surface's height and shape from one single "intelligent" sensor. This matrix sensor scans the surface using the deformations of a projected laser line. For each scan the form of the projected laser line into the sensor is used for depth information retrieval.

Once the choice of an appropriate illumination and recording geometry has been made, recording of the scene to inspect can be started. To sense its environment, the computer vision system will extract and process this scene information acquired by the specific sensors. The representation of the object to be inspected is depicted by one or a sequence of images. An image gives a planar information about an object so that it can be represented by a two-dimensional function (in case of a monochrome sensor) whose definition domain is related to the size of the depicted scene and whose values are proportional to the energy of the light reflected by the object and received by the sensor.

The difficulty is to process the acquired information contained in the image and to convert this relevant data into a machine understandable description. This operation of image treatment for information extraction is part of the image processing. Different image processing parts may be distinguished as thresholding and segmentation or (statistical) pattern recognition.

The thresholding and segmentation reveals important information and simultaneously reduces noise with filtering or other signal processing methods. These techniques also deal with the computation of enhanced images for a better processing. This includes color correction (e.g. brightness or contrast adjustments), conversion to different color spaces or the alignment or combination of a mosaic of subimages. Pattern recognition deals with the identification of significant shapes, regions or points from the image. For this purpose, local detection operators, image segmentation methods, morphological operations, or geometric transformations as enlargement, reduction, or rotation can be applied.

The two main image processing topics are the image segmentation and the feature extraction.

The segmentation step usually consists in partitioning an image in several regions so that they can be processed afterwards by successive operators. In case of surface inspection, segmentation algorithms are used to separate a region depicting a defective surface from the rest of the image. This operation necessitates that the regions show different characteristics from the surrounding background. Such characteristics can be retrieved from the grey or color values of the image. Different segmentation approaches exist. Contour-based approaches consist in determining the transitions between image regions, and region-based approaches group image points together with similar characteristics.

A possible way for contour retrieval consists of scanning the image with a window defining a region of interest. An edge-detection operator is applied for each window position to detect significant transitions in the image. The detection criterion is most often the maximum of the first derivative, or the zero-crossing of the second derivative. Edge detectors and corner detectors may be applied. These detectors do not lead to a perfect segmentation of the image, thus further operations may be necessary, as e.g. contour closing and contour thinning. The former can be done by analyzing the local density of the edges, by comparing the texture on either sides of these edges or by using morphological operators. A morphological approach can also be applied for contour thinning, with e.g. skeletonization filters.

Also a connectivity-preserving approach may be applied, which e.g. refers to active contour models (also called Snakes). These algorithms start with some initial boundary shape represented in the form of spline curves to iteratively modify it by applying various shrink/expansion operations according to some energy function.

While the contour-based approaches rely on strong intensity differences between neighboring pixels, region-based methods use the similarities of grey levels.

Threshold-based methods are a further region-based segmentation technique. They consider that a monochrome image may consist of different regions. It is assumed that each region corresponds to different grey level ranges which are identified with one or more threshold values. The challenging task consists in the automatical determination of these pixel threshold values to separate object regions from background regions using local or global grey level distributions. Statistical approaches may be applied which are based on the minimization of a criterion function. Solutions to use thresholding techniques on color images also exist.

Further region-based methods are the merging of similar pixels (or region growing), the splitting of dissimilar regions and the computation of split and merge. The principle of all three methods is to build (merge) and/or divide (split) image regions using an homogeneity criterion. The algorithms stop when for each merged region, no pixel in the neighborhood, or for each split region, no image region, respects the criteria. One simple decision criterion is e.g. based on the analyzing of local histogram functions.

Instead of directly classifying the segmented regions into given classes, an intermediary feature extraction step ("Features" as depicted in Fig. 1) may be used which serves two purposes. The first purpose is data reduction. Indeed, processing huge or numerous image regions would require a large amount of memory and computation power for the classification algorithm. The second purpose is the increase of discriminating information: The depicted information in the segmented regions in form of grey level values is not necessarily optimal for the classificator. They will be converted into a structured information so that each element of the same class shares similar properties and all elements of different classes have different properties. This step, based on the analysis of image characteristics, is called the feature extraction process. Different techniques to extract different feature types from an image may be distinguished. Which features are relevant and how these features are computed often depends on the specificity of the inspection task.

Feature extraction methods consist in intensity-based and/or geometric-based approaches. Geometric features can e.g. be used for robot vision systems, audio-visual speech recognition or document processing. Other applications may use a combination of geometry-based and intensity-based features, e.g. for video surveillance, medical image analysis or face recognition.

Four different categories of features to describe image regions may be distinguished. These feature categories are based whether only the spatial, the grey level or the combined spatial and grey level distribution are assessed. Morphometric features describe the size and shape of the regions to characterize, densitometric features are computed from the grey level intensities of these regions. Two other feature types may be considered: one describing the textural aspect of the image regions and one characterizing the relationship between the different selected image regions.

While textural characteristics may constitute a cohesive set of features, the texture analysis field covers the processing of a particular image type. Thus, the information contained in such textural images can be much more complex and diversified than the depicted information in non-textural images.

Thus, texture analysis is a more general approach of feature extraction. The spatial distribution of grey levels may be used to retrieve the features, and so to integrate both intensity and shape characteristics. The image may also be transformed from the scale space into another basis, as the Fourier or the Wavelet domain. The former is related to the geometry of the feature, whereas the latter also integrates the scale characteristic.

Textural features are often divided into different specific sets according to the involved feature computation methods. Statistical, geometrical, spectral and model-based textural features may be considered. Textural features may also be subdivided into structural approach, statistical approach, model-based and transform approaches. One advantage of generic textural features is that they are applicable on different image types and contents.

Each pair of textured images can be differentiated using one characteristic feature related to the spatial distribution (geometry-based) or the grey level distribution (intensity-based) of the object and/or the background.

The average and the variance are the two first moments of the grey level distribution in a selected region or contour. The contrast is proportional to the difference between the intensity of the selected region or contour and the background intensity. These three measures are important intensity-based features for the differentiation of image pairs. The orientation gives the main direction of the image structure, the scale is a measure of the size of the depicted objects, whereas the form can e.g. quantify the 'circularity' of the depicted objects.

All these six features are of course not specific to these type of images. Manifold applications use similar features, sometimes proposing the combination of geometry-based and intensity-based characteristics.

Also the average and the variance features for the comparison of images may be used. For example a set of intensity and geometry features may be used to describe the image. The contrast feature, for example, may be used to reduce the image artefacts, e.g. in digital television. Connected-components contours may be used, for example, to compute the orientation characters in the image. A method based on the Fourier transform of the images may be used to compute the relative position, the orientation and the scale of a pattern. A wavelet-based method may, for example, be used for determining a structural primitive in an image with regular texture.

The extracted features can be used for the classification process. The feature vector c as depicted in Fig. 1 contains all the extracted characteristics of the pattern F.

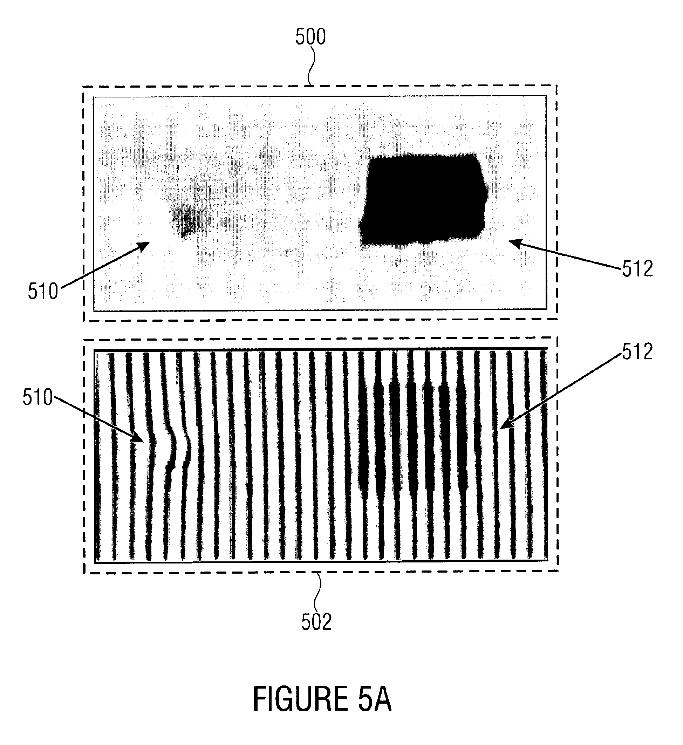

**Fig. 5a** shows the recording of a planar structure 500, 502 with a 3D-defect 510 on the left end a 2D-defect 512 on the right. It is clearly noticeable that both defective surface parts can be visually enhanced and discriminated.

Figure 5a shows the images of a scene illuminated using the ambient diffuse light 500 (upper part of the figure) and a structured light pattern 502 (lower part of the figure). This scene consists of a 3D defect 510 and a 2D defect 512, both situated on matt surfaces.

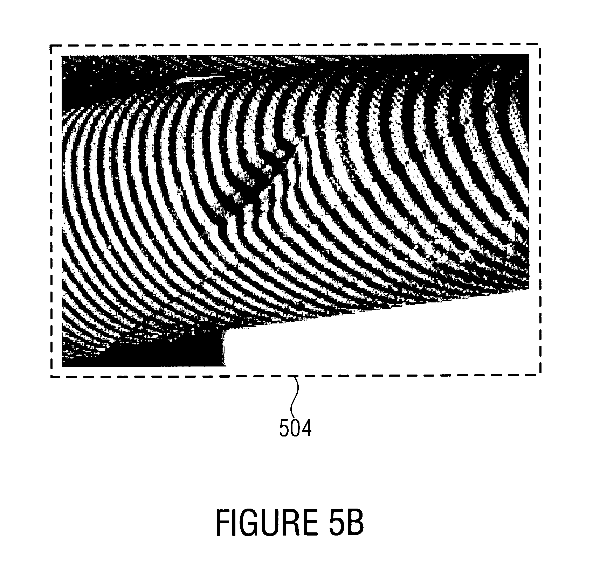

**Fig. 5b** shows the recording of a plastic tube 504 with one 3D-defect, a font and the background region. All these three surfaces can be discriminated by means of the projection of the stripe structure.

It can clearly be observed how different defective surfaces, 3D 510 and 2D 512 in case of Figure 5a, can be enhanced using a projected light pattern. This surface enhancement principle can be adapted to any surface type (e.g. reflective or matt) and to any surface shape (e.g. planar or cylindrical). Fig. 5b depicts the surface enhancement of a specular plastic tube 504 with a stripe pattern.

In both specular 504 and matt 500, 502 cases following principles hold: the deformation of the surface shape, characteristic of 3D defects, induces a geometrical deformation of the corresponding stripe structure. A change of the surface roughness, synonymous of 2D defects, provokes a change in the intensity of the observed stripe pattern. A surface can therefore be characterized by its direction, given by its surface normal and its reflectance, expressed by the

reflectance coefficient $\rho$. Since $\rho$ expresses the ratio of the reflected to the incident flux of light, its values are between 0 and 1. The direction and the intensity of the reflected light flux are therefore directly linked to the geometry and the reflectance of the illuminated surface.

Nevertheless, to observe the projected light pattern, a fundamental difference of the recording technique between these two surface types exists. Concerning matt objects, the cameras observe the light pattern on the surface to be inspected. Whereas, for specular surfaces the camera records the light structure reflected by the inspected surface. Hence, the camera focusses on the surface to be inspected when these are matt and will focus on the light screen when the surface is highly reflective.

For both surface types, the positions of the camera C and the lighting screen L, but also the size of the screen and the aperture of the camera will be chosen so that the disturbances induced by defective surface elements are depicted in the recording sensor.

The detection of 3D defects is based on the variations of the surface normal as far as highly reflective surfaces are concerned. Depending on the positions of the recording camera and the illumination screen very low variations of the surface normal can be detected. Concerning matt surfaces, the detection of 3D defective surface parts based on the projection of a stripe pattern, relies on the positions of the surface in the scene coordinate system.

2D defective parts are synonymous of a change of the reflection coefficient $\rho$. Hence, for both specular and matt surfaces these defects can be visually enhanced, as the variations of the grey levels in the image are directly linked to the variations of the reflected light flux on the surface.

Concerning the inspection of specular and matt objects relying on the projection of a stripe pattern, the two following conditions should be fulfilled: a periodical light pattern is projected on the image and every defective surface induces a visible disturbance of the depicted stripe pattern.

Hence, for specular and matt objects, the inspection of a surface $S_{inspect}$ comprises the detection of defective surfaces $S_{3D}$ and $S_{2D}$ whose size is huger than a minimal size $S_{3D,min}$ and $S_{2D,min}$.

The investigation of the most appropriate features describing the stripe image parts is a crucial and important step. Hence, in order to compare different classification approaches, the same reference image patterns will be used.

If the lighting technique was optimized so that the surfaces are depicted with a simple stripe pattern in the images, artefacts arising from non constant recording conditions (illumination variations, object positioning tolerances, etc ...) may be unavoidable. Thus, in order to be representative, the reference considered stripe image databases includes images of 3D and 2D defective surfaces, images of acceptable surfaces and images with recording artefacts (in case of the specular surfaces).

All the visually enhanced surfaces depicted in the Figs. 5a and 5b can be automatically characterized by means of the methods according to embodiments of the invention.

The inspection process of free-form surfaces comprises the automatic detection and classification of defective surfaces of free-form objects.

For free-form objects, for example, two types of defects may be distinguished. First kind of defects are synonymous of a change of the shape or the geometry of the objects, such surface parts will be called 3D defect. Second type of defects are named 2D defects, as they are characterized by a different texture or color of the metallic surface. Figure 5a shows a recording of a planar structure where these two kinds of defective surfaces are represented. The challenge of the automatic detection and discrimination of such 3D and 2D defective surfaces depicted in Figure 5a, is to define a machine vision technology which fulfils the industrial inspection requirements. Hence, an adapted hardware and software solution may be defined and developed for this specific inspection task.

A structured illumination can be used for the visual enhancement and discrimination of different parts of the surface under inspection. As the common approaches use a structured illumination to reveal three-dimensional defects in combination with a smoothed lighting to enhance two-dimensional defective surfaces, embodiments of the invention fulfil both tasks with only one illumination technique. A necessary condition is that the defective surfaces to be discriminated induce characteristic deformations in such a way that these surfaces can be automatically classified with image processing methods. Hence, a preliminary adjustment process of the recording set-up may be necessary. However, a knowledge of the three-dimensional position of the recording elements is not necessary.

The success of such an inspection methodology according to embodiments of the invention which uses the stripe deformations to discriminate defective from non-defective surfaces, may be mainly dependent on the geometry of the depicted stripe pattern in the image. The robustness of the method depends on the differentiability of the projected light pattern as far as such a pattern is related to a non-defective or to a defective surface. The distortions of the pattern should mainly be synonymous of a defective part. Further distortions caused by the geometry of the inspected surface or the position of the recording sensor should be avoided as far as possible.

Thus, embodiments of the invention based on the interpretation of the stripe disturbances are hardly dependent on the geometry and the arrangement of the recording set-up elements (inspected surface, illumination and recording sensors). Indeed, all these elements have a direct influence on the depicted stripe pattern geometry. The surface to be inspected and the lighting may be positioned, so that a basic light pattern is depicted in the recording sensors. The image stripe pattern that is considered may consist of a periodical and vertical structure. This projected light pattern serves for the interpretation of the surfaces to be inspected. The two above described types of defective object parts: 3D and 2D surfaces are considered.

The first are synonymous of a structural change of the surface, whereas the second correspond to a different texture or roughness of the surface. Concerning the different types of surfaces that can be inspected using the method according to embodiments of the invention, highly reflective and matt surfaces are considered. In case of specular surfaces, the angle of the reflected light ray by the surface is equal to the angle of the incident light ray with respect to the surface normal. In the matt case, each elementary surface can be assimilated to a Lambertian source, i.e. that the incoming light ray is spherically and equally reflected.

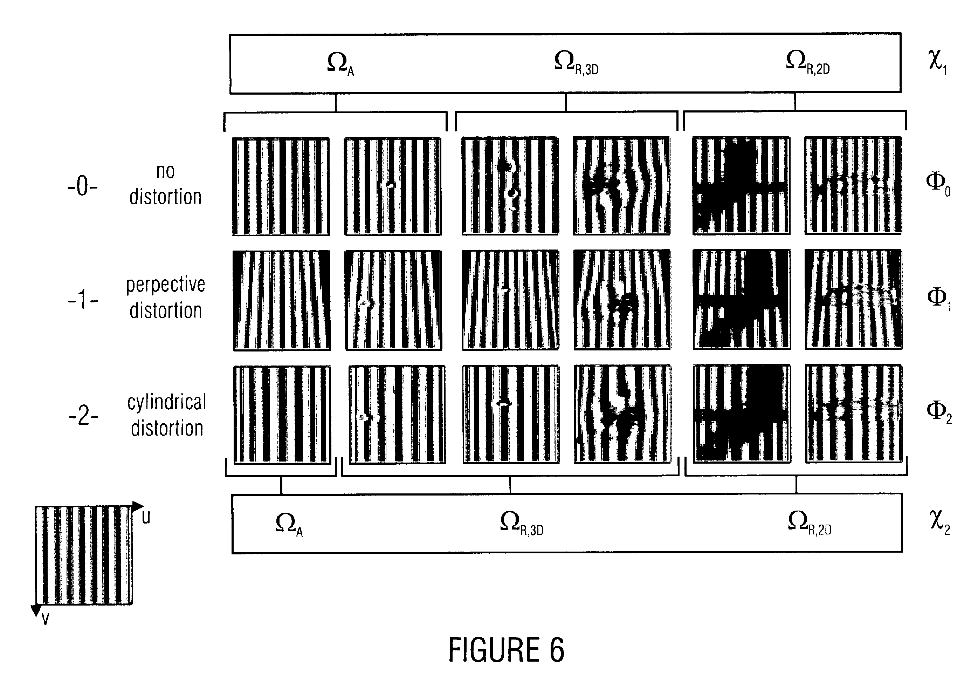

**Fig. 6** shows a reference set of patterns comprising the three considered stripe image data sets. $\Phi_0$ is the reference set where the stripe structures are periodical and vertical, $\Phi_1$ is the set corresponding to the warped patterns of set $\Phi_0$ with a perspective distortion of type - 1- and $\Phi_2$ is the set corresponding to the warped patterns of set $\Phi_0$ with a cylindrical distortion of type -2-. All the patterns were manually classified into three classes $\Phi_A$, $\Phi_{R,3D}$, $\Phi_{R,2D}$ corresponding to non-defective surfaces and defective surfaces with 3D and 2D defects. The reference images for the three considered sets $\Phi_0$, $\Phi_1$ and $\Phi_2$ serve as reference patterns for the classification of free-form surfaces. The images of set $\Phi_0$ are images recorded by a conventional illumination method for planar surfaces, whereas the images of said $\Phi_1$ and $\Phi_2$ were artificial warped to simulate the required distortions. $\Phi_0$ corresponds to patterns without distortion related to the shape of the object. $\Phi_1$ corresponds to patterns with a distortion of type -1-, $\Phi_2$ corresponds to patterns with a distortion of type -2-. All the patterns have a size of 64 x 64 pixels and were classified into three classes $\Phi_A$, $\Phi_{R,3D}$ and $\Phi_{R,2D}$. All sets are made of 252 images.

All the 252 patterns of the three image sets $\Phi_0$, $\Phi_1$ and $\Phi_2$ are characterized using the three feature sets $F^S$, $F^F$ and $F^{SF}$. In order to evaluate the characterization possibilities offered by each of these feature sets, the classification results (detection rates in percent) of these three image sets are listed in the following table:

| Distortion type / Feature set | $\Phi_0$ No Distortion | $\Phi_1$ Perspective | $\Phi_2$ Cylindrical |
|---|---|---|---|
| $F^S$ | 90.4 | 78.1 | 88.4 |
| $F^F$ | 89.2 | 85.7 | 87.7 |
| $F^{SF}$ | 93.6 | 86.5 | 88.4 |

The results first show that in general high classification rates can be obtained even when the images are distorted. This demonstrates that the proposed feature set can be used for the characterization of free-form surfaces by the methods according to embodiments of the invention.

From the table above depicting the detection rates it can be seen that the combination of different types of features, here in case of feature set $F^{SF}$ where intensity-based and geometry-based features are combined with Fourier-based features, lead to improved detection rates.

Embodiments of the invention utilize various feature-based techniques to characterize the free-form stripe structures, as e.g. the textural analysis methods, intensity and geometry-based methods and other methods can be combined together or with further different feature-based approaches, to improve the detection rates.

The elements of the reference stripe image dataset as depicted in Fig. 6 were gained by the industrial application involving the structured illumination as depicted in Fig. 3a. For training and evaluating of a classification algorithm, a representative set of reference annotated images is necessary. The reference image dataset is used for the evaluation of the different algorithms and describes the defects recorded by an automatic inspection system. The images can be used for the qualification of the system and were annotated by a human inspector in non-defective and defective surface classes and sub-classes.

The reference data set $\Phi$ as depicted in Fig. 6 consists of $N_F$ = 252 patterns. Each depicts only one type of defect belonging to one of the $N_k$ predefined classes $\Omega_K \in \Omega$. These patterns will be classified into three distinct classes $\{\Omega_A, \Omega_{R,3D}, \Omega_{R,2D}\} \in \Omega$. Patterns depicting non-defective surfaces are grouped into the sub-class A. These patterns depict the object surfaces recorded with ideal and non-ideal recording conditions, but also all non-critical 3D defects. Patterns depicting defective surfaces consist of the two distinct sub-classes, $\Omega_{R,3D}$ and $\Omega_{R,2D}$. Those classes correspond to defective surfaces with 3D and 2D defects.

Figure 6 shows the different classes describing the stripe patterns and also gives examples of typical stripe images to be classified. Each class represents one type of recorded surface. The eighteen images of Figure 6 are grouped into three different classes $\{\Omega_A, \Omega_{R,3D}, \Omega_{R,2D}\}$. The non-critical object parts are of class $\Omega_A$, the critical depth defects are of class $\Omega_{R,3D}$ and the critical surface defects are of class $\Omega_{R,2D}$.

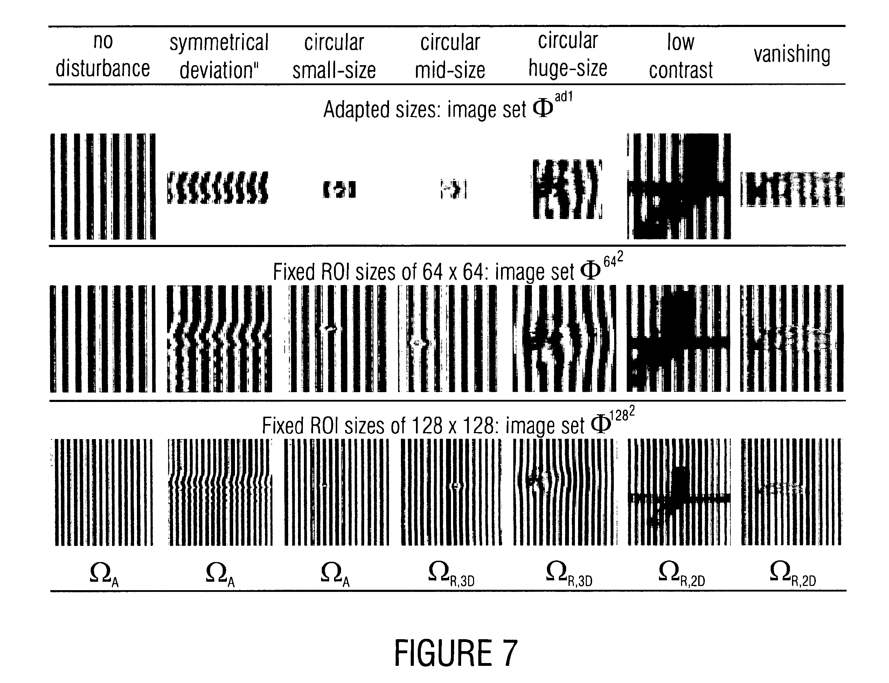

A typical stripe pattern with "no disturbances" representing a surface illuminated under ideal recording conditions is depicted in Figure 6 (first column). An incorrect or an imperfect recording (e.g. bad positioned or de-justified object with respect to the image sensor) causes a "symmetrical deviation" of the stripes (depicted in Fig. 7). An external granularity compressed on the object surface during its manufacturing leads to circular stripe disturbances. Depending on the size of the granularity, a "circular small-size", "circular mid-size" or "circular huge size" disturbance may occur, see Figure 6 (second column),(third column),(fourth column). A "low contrast" of the stripe, see Figure 6 (fifth column), is mostly due to marks. Whereupon deeper abrasions induce a local "vanishing" of the stripe, see Figure 6 (sixth column).

In case of free-form surfaces recorded with line-scan cameras, the recorded object at a time t may be different from the object profile recorded at a different time t+1. Hence, the observed stripe structure in the image may not remain periodical and vertical in the image. This happens when the shape of the surface to be inspected is not symmetrical along the moving direction of the object. As a consequence, an extensive range of stripe structures may be considered. To enumerate all possible stripe deformations would be hardly possible. Hence, it is preferable to focus on a restricted and predefined number of stripe deformations. Therefore, two different types of deformations -1- and -2- will be taken into consideration. Two different variation types -1- and -2- of the depicted stripe structure will be considered which may be provoked by the varying geometry of the recorded object and not by the presence of a defect onto the surface.

The first type of distortion (second row of Fig. 6) induces a deformation of the stripe structure in the images so that the period of the stripes is the same along the u-axis of the images and increases from top to bottom along the v-axis of the image. Type -1- stripe perspective distortion corresponds to the recording of planar surfaces which are not parallel to the ground plane. In that case the degree of distortion is proportional to the angle $\alpha$ between these surfaces and the ground plane (an undistorted stripe pattern corresponds to an angle of 0). At least, 4 different distortion degrees corresponding to 4 increasing values of $\alpha$ will be considered.

The second distortion (third row of Fig. 6) provokes a deformation of the stripes, so that the variations of the stripe period are the same along the v-axis. The period is maximum in the central vertical part of the image and decreases to the left and the right image borders. Type -2- stripe cylindrical distortions are due to the recording of cylindrical shapes. In that case the degree of distortion is proportional to the curvature $\kappa$ of the surface (a curvature of 0 corresponds to undistorted stripe patterns). Here also, 4 different distortion degrees corresponding to 4 increasing values of $\kappa$ will be taken into consideration.

Conventional methods based on a structural lighting technique perform the surface inspection by means of the stripe deformation interpretation without a 3D depth recovery. Embodiments of the invention combine the inspection method with the 3D scene information and provide an improvement of the surface inspection process.

Two different types of 3D defects may be considered. According to their depth, surfaces will be classified as non-defective or defective. Hence, a combined adaptive and depth retrieval approach allows to classify the image patterns according to the depicted disturbances. In a first pattern arrangement $\chi_1$, all the 3D defects may be considered as defective (all lead to similar disturbances) in a first time. Then, in a further step the non-defective and the defective parts may be separated according to their computed depth. In a second pattern arrangement $\chi_2$ for the classification of the reference image patterns each 3D defect may be considered as defective.

Concerning the classification of free-form surfaces, it may be observed that the detection performances decrease with an increase of the distortion in the images, whether these are of type -1- or of type -2-. Second, the use of the Combination of evaluation features 26 leads to better classification rates for both types of distortions.

However, an improvement of the classification rates when the wrapper 1-NN feature selection method is used may be achieved, especially concerning the distortion of type -1-.

Further on it may be noticed that an improvement of the classification rates may be achieved when a pattern arrangement $\chi_2$ instead of a pattern arrangement $\chi_1$ is addressed. The reached classification rates $C_P$ by means of a distortion of type -1- are comprised between 85.7 % and 91.2 % for a $\chi_1$ arrangement and between 88.1 % and 92.1 % for a $\chi_2$ arrangement. Concerning a distortion of type -2-, the classification rates $C_P$ are comprised between 87.6 % and 91.2 % for a $\chi_1$ arrangement and between 88.5 % and 93.3 % for a $\chi_2$ arrangement.

**Fig. 7** depicts a reference set of patterns according to an embodiment of the invention. The reference set of patterns comprises seven embodiments of image sets, one of adapted size $\Phi^{ad1}$ and two of fixed size $\Phi^{64^2}$ and $\Phi^{128^2}$.

Manually fixing the size of each pattern, so that only the disturbed stripe structure is depicted, has been a subjective process. In fact, the depicted defective surfaces are usually not characterized by sharp contours. Therefore three different sets of patterns are considered whose size is adapted to the size of the stripe structure to be classified. As this selection process is not objective, each set of patterns was selected by a different person. Two further sets of patterns with fixed sizes of 64 x 64 pixel and 128 x 128 pixel are considered. Hence, the disturbances depicted in the 252 reference images were preselected five times, so that at least five different image sets, three with adapted sizes $\Phi^{ad1}$, $\Phi^{ad2}$, $\Phi^{ad3}$ and two with fixed sizes $\Phi^{64^2}$, $\Phi^{128^2}$ can be used. For image sets $\Phi^{64^2}$ and $\Phi^{128^2}$ the stripe disturbances are not necessarily in the center of the pattern. Figure 7 depicts seven examples of image sets $\Phi^{ad1}$, $\Phi^{64^2}$ and $\Phi^{128^2}$.

The resolution in horizontal direction is three times greater than the resolution in vertical direction. The patterns

of image set $\Phi^{64^2}$ correspond to an object surface of 2mm width and 6mm height, whereas the patterns of image set $\Phi^{128^2}$ correspond to an object surface of 4mm width and 12mm height.

It is known that the chances to reach the optimal computer vision process increase with the evaluation for each part of the process, of different methods relying on different mathematical models or opposite methodologies. However, trying all possible methods is not realizable, as the number of possible combinations is doubled each time a new method is involved. As a consequence, a limited number of methods for the three parts of the process will be considered.

For this purpose different sizes of segmented regions (e.g. 3 adapted and 2 fixed as depicted in Fig. 7), adapted feature retrieval approaches with different settings, different classification algorithms, and different classification methods may be used.

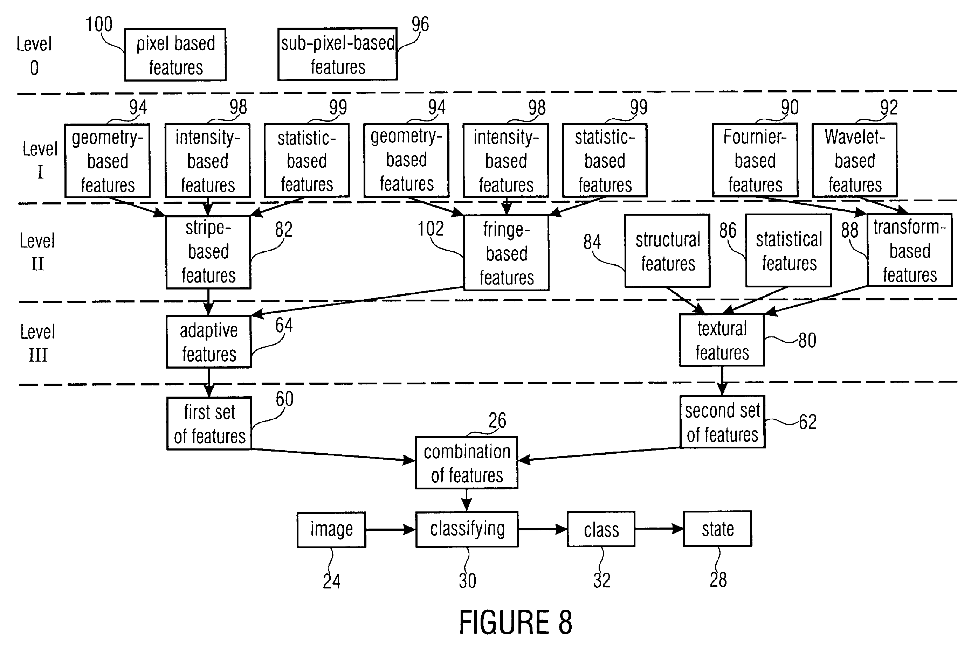

**Fig. 8** depicts a structural tree (feature tree) comprising features which may be combined for applying a combination of these features 26 for classifying 30 an image 24.

A first set of features 60 and a second set of features 62 are combined to a combination of features 26. The first set of features 60 comprises adaptive features 64. The second set of features 62 comprises textural features 80. Adaptive features 64 and textural features are associated to a level III of features of the feature tree. The adaptive features 64 comprise stripe-based features 82 and adaptive fringe features (fringe-based features) 102. The textural features 80 comprise structural features 84, statistical features 86 and transform-based features 88. The stripe-based features 82, the adaptive fringe features 102, the structural features 84, the statistical features 86 and the transform-based features 88 are associated to a level II of features of the feature tree.

The stripe-based features 82 as well as the adaptive fringe features 102 comprise geometry-based features 94, intensity-based features 98 and statistic-based features 99, which are associated to a level I of the feature tree. The geometry-based features 94, intensity-based features 98 as well as the statistic-based features 99 comprise pixel-based features 100 and sub-pixel-based features 96, which are associated to a level 0 of the feature tree.

The transform-based features 88 comprise Fourier-based features 90 and Wavelet-based features 92 which are associated to the level I of the feature tree.

Structural features 84 can be based, e.g. on the method of "Y. Chen, M. Nixon, and D. Thomas, Statistical geometrical features for texture classification, Pattern Recognition 28 (1995), no. 4, 537-552", whereas statistical features 86 can be based, e.g. on the methods of "Robert M. Haralick, K. Shanmugam, and Its'hak Dinstein, Texture features for image classification, IEEE Trans. on Systems, Man, and Cybernetics (SMC) 3 (1973), no. 6, 610-621" and "Michael Unser, Sum and difference histograms for texture classification, IEEE Trans. on Pattern Anal. and Machine Intell. (PAMI) 8 (1986), no. 1, 118-125".

The textural features 80 comprise transform-based features 88. The transform-based features 88 comprise Fourier-based features 90. For example a number of 33 Fourier-based features 90 may be applied for classifying 30.

Three different textural classification approaches 80 may be used for the inspection of free-form surfaces: the statistical-based 86, the structural-based 84 and the transform-based one 88. The word "texture" has manifold meanings, it can describe a large panel of different surface types and even though it is a common term in the field of image processing, it has not been exactly defined yet. For our purposes we can retain that the goal of texture analysis is to describe textured images by using local or global image properties, which is related to a representation of two basic dimensions: tonal primitives composing the texture, and their spatial organizations. The following four categories of textural approaches are considered. The structural approach considers textures as a set of primitives (micro-texture) whose hierarchies and spatial arrangements (macro-texture) are defined by placement rules. This approach can be used for synthetic images but reveals to be ill-defined for natural textures, where the variability of macro- and micro-textures is often too large and so difficult to represent.

A more complex method first binarizes the image for different thresholds. The geometrical properties (irregularity and quantity) of the connected regions for each binary image are computed. Statistical characteristics are then computed for the whole binary images. In contrast to structural methods, statistical approaches represent texture indirectly by properties that govern the repartition and the relationship of image intensity levels. The features are directly obtained from statistical computations of the original image or from the derived images. Local features are easy and fast computed: mean, variance, minimum and maximum grey level values, median, and appropriate features for the derived filtered image.

Different edge filters like the Sobel or the Kirsch operators are used. Another method uses a second order statistic and is based on the cooccurrence matrix which is a two dimensional histogram of all pixel pairs. This computing is generally done for four different directions so that at least 14 different statistical features are computed from the matrices.

In order to reduce the computational complexity of this method, two one-dimensional histograms representing the difference and the summation of the pixel pairs may be used. A total of 16 different statistical features may be computed from four different directions and for both histograms.

Another method is based on a run length. The run lengths are computed in four different directions (0˚, 45˚, 90˚, 135˚). A two-dimensional histogram representing the length of the pixel chains and the intensity level may be built for each direction. Five different statistical features may then computed for each histogram giving a total of 20 features.

A reduction of the number of intensity levels may be often necessary in order to get high run-length values.

Another approach describes textures by fractal and stochastic models. The parameters of this model approach are estimated and then used for image analysis. The fractal approach gives good results describing natural textures. It is used describing objects of high degree of irregularity. An example of stochastic model is the Markov Random Field, which considers that each pixel in the image can be modeled by the neighboring ones.

The transform approaches 88 use features computed from the transformed image. The Fourier 90, Gabor or the wavelet transformations 92 are the most popular. The Fourier approach 90 uses the local parts of the frequency spectrum. The features are obtained from the Fourier spectrum for different regions. As Fourier features 90 suffer from a lack of spatial localization, better results are often achieved by Gabor features which do integrate spatial localization.

Gabor wavelets are defined for different directions (0°, 45°, 90°, 135°) and for different lengths. The most efficient of the transform models are the wavelet transform which integrate frequency, spatial localization and different image scales.

The panel of applications in texture analysis methods 80 is very wide as it concerns meteorology, medical, industrial, military e.g.. A method for rock image classification, for example, uses spectral features and features calculated from cooccurrence matrices. Satellite terrain images classification may be based on textual features, for example, by fusing a model based and a transform texture classification approach. Satellite images of clouds, for example, may be classified by using statistical, structural and transform models. Neural classifiers with statistical features may be used for breast cancer detection with mammographic images. Morphological textural methods may be applied e.g. for cervical cell nuclei classification. Statistical features such as mean and standard deviation of intensity levels within a window may be used to classify military targets in infrared images, for example.

Texture types classification algorithms 80 may be applied in a wide range of applications. On one side homogeneous images like rock, cloud, breast or even infrared images, on the other side more fine details as cells or terrain images.

This demonstrates that it may be a-priori not possible to know which method best suits to a classification task where specific textured images are involved. It may be therefore necessary to test and compare different textural approaches to find the most appropriate one. Several texture databases May be used for the evaluation of texture algorithms. These include regular to stochastic different textural grey levels or color images.

All those texture analysis methods 80 are top-down approaches, meaning that they have been developed for a wide range of texture types. Each involved texture analysis method will be adapted to the patterns to analyze, i.e. the geometry and the grey level distributions of the depicted stripe structures. For each texture analysis approach, different adapted parameter settings will be considered. Each setting will be evaluated by means of the classification rate.

Each image pattern F is considered to be represented by a discrete function $f_{kl}$. $f_{kl}$ is the result of the discretization and quantification of a two-dimensional continuous function $f_{uv}$. The u-axis which is horizontal with ascendant values from left to right and the v-axis which is vertical with ascendant values from top to bottom describe a cartesian coordinate system. Upper left image point at pixel position (0, 0) of F corresponds to the origin of the coordinate system.

The value f(u,v) of continuous $f_{uv}$ at position (u,v) after quantification represents the grey value at position ($k\Delta u$, $l\Delta v$) of the discrete function $f_{kl}$. F can be represented as a matrix [f(k,l)] with $M_u$ rows and $M_v$ columns. $\Delta u$ and $\Delta v$ are the sampling distances in u- and v-directions. Both may be considered as equal to 1, so that following expression defines the mathematical representation of an image: The quantification process

$$f_{u,v} \implies \begin{aligned} & f_{k,l}, \\ & F = [f(k,l)], \\ & k \in \{0, 1, \cdots, M_u - 1\} \quad l \in \{0, 1, ..., M_v - 1\} \end{aligned}$$

transforms all values $f(u,v) \in R$ into the next integer value $f(k,l) \in N$ defined by the $N_g$ grey levels of quantification where $0 \leq f(k,l) \leq (2^{Ng} - 1)$. Ng is also called the depth of the image pattern F. Image representations in the time domain will be described using these notation conventions.

For an image F having Ng intensity levels at least Ng different binarized images $F_{b,\theta b}$ can be computed. For each binarized image $F_{b,\theta b}$ the structural-based features may be calculated as follows. All 1-valued pixels are grouped into a set of connected pixel, called connected regions. The same is done for the 0-valued pixels. Two numbers may be defined, the number of connected regions of 1-valued and 0-value pixel for binarization level $\theta_b$, respectively NOC1 ($\theta_b$) and NOC0($\theta_b$). Then a parameter may be introduced defining the irregularity (or un-compactness) IRGL of each connected region. By computing the average of IRGL two further numbers are obtained for all 1 and 0 connected pixel groups of image $F_{b,\theta b}$, respectively IRGL1($\theta_b$) and IRGL0($\theta_b$).

Each of those four numbers are functions of binarization threshold $\theta_b$. Those functions are further qualified with four statistics, which are the maximum value, the average value, the sample mean and the sample standard deviation for each of the four functions of $\theta_b$, NOC1($\theta_b$), NOC0($\theta_b$), IRGL1($\theta_b$) nd IRGL0($\theta_b$). For each image $F_{b,\theta b}$ at least 16 different features may be obtained defining a feature vector $C_{c,(\theta b)} \in R^{16}$.

The benefits of using different binarizations are twice. First, it gives the possibility to consider different intensity levels of image regions and so to integrate the intensity information in the feature computation. Then, it allows to search for best settings, i.e. to use only those binary images which lead to best classification results.

Such images have the particularity that the grey level distribution seems to be in general bimodal, as bright and dark stripe structures are depicted. Hence, the stripe images can be fully described by using only a few binary images.

Statistical features 86 are, for example, the Spatial Grey Level Dependence methods (SGLDM). The latter is an extension of the structural approach. The assumption is that the texture context information is contained in the spatial relationship the grey tones have to one another. This is a different approach than the structural methods as here the form and the spatial organization of texture's primitives are described.

The relationship of textural primitives for each image F is evaluated with one or more cooccurrence (or grey-tone spatial-dependence) matrices. Each cooccurrence matrix is a two dimensional histogram of all pixel pairs in u- and v-directions in the stripe image F. These matrices are symmetric, which implies that the cooccurrence matrices of an image F and its 180˚ rotated are the same. Therefore, pixel pair computation is only done for the four different directions 0˚, 45˚, 90˚ and 135˚. 14 different statistical features, for example, may be used to express e.g. the homogeneity or the contrast of an image. Those features are retrieved from each cooccurrence matrix and stored in a feature vector $C_{(du,dv)} \in R^{14}$ where du and dv are the considered distances in the u- and v- directions.

The idea behind the choice of those feature parameters is to model the human perception of texture. The sum and difference histograms may be used as an alternative to the cooccurrence matrices. With the sum and difference histograms 9 of the 14 statistical features can directly be computed whereas the further 5 can be estimated.

For the classification of stripe images 15 different features may be calculated from the sum and difference histograms, where 8 features are global histogram features and 7 features are the equivalent features to those computed from the cooccurrence matrices. All features are stored in a feature vector $C_{(du,dv)} \in R^{15}$ where du and dv are the considered distances in the u- and v-directions. The key point of SGLDM methods is that they characterize the relationship of pixel pairs intensity. The choice of the pixel pairs, i.e. their distance along u and v-axis is therefore decisive for a good classification. Hence, the most appropriate values of these two distances shall be defined according to the geometry of the stripe structures to be characterized.

The Fourier transform F is a transformation between an input space (spatial domain) into an output space (frequency domain). It's inverse is called the inverse Fourier transform $F^{-1}$. The Fourier transform is a generalization of the theory of Fourier series and is applicable to all non-periodical and integrable functions.

For the discrete image F the Fourier transform and the inverse Fourier transform are described by following equations:

$$\hat{F} = [\hat{f}_{\kappa\lambda}] = \sum_{k=0}^{M_u-1} \sum_{l=0}^{M_v-1} f(k,l) e^{-j\frac{2\pi\kappa}{M_u}k} e^{-j\frac{2\pi\lambda}{M_v}l}$$

$$\kappa = 0, 1, ..., M_u - 1; \quad \lambda = 0, 1, ..., M_v - 1$$

$$F = [f_{k,l}] = \frac{1}{M_u M_v} \sum_{\kappa=0}^{M_u-1} \sum_{\lambda=0}^{M_v-1} \hat{f}(\kappa,\lambda) e^{j\frac{2\pi k}{M_u}\kappa} e^{j\frac{2\pi l}{M_v}\lambda}$$

$$k = 0, 1, ..., M_u - 1; \quad l = 0, 1, ..., M_v - 1$$

An important remark considering the Fourier transform is that if the samples of the matrix $[f_{k,l}]$ of the input time image F are real values ($[f_{k,l}] \in R$), the samples of the matrix $[f_{k,\lambda}]$ of the output frequency image F^ are complex values ($[f_{k,\lambda}] \in C$) so that the information of a Fourier transformed image is contained in the magnitude and the phase of the spectral representation. In many applications only the magnitude information is needed and the phase information is discarded. However, despite this common practice, in some context phase information should not be ignored. For example if we construct synthetic images made from the magnitude information of one image and the phase information of another, it is the image corresponding to the phase data that we perceive, if somewhat degraded. In our case we will only consider the magnitude of the Fourier transform, noted |F^|. Its representation is done in a cartesian coordinate system whose $v_1$-axis is horizontal with ascendant values from left to right and $v_2$-axis is vertical with ascendant values from top to bottom.

Images F and |F^| have the same dimensions. |^F| may be described with a two-dimensional continuous function f^, whose quantified values f^(v$_1$, v$_2$) at position (v$_1$, v$_2$) represent the magnitude of the pectrum at position (κΔv$_1$; κΔv$_2$), where κ ∈ {0, 1, ···,M$_u$ - 1} and {λ ∈ {0, 1, ... ,M$_v$ - 1} . Δv$_1$ and Δv$_2$ are the sampling frequencies for the v$_1$- and v$_2$-axis, that are considered for simplification purposes equal to 1. Then, following expression defines the mathematical representation of an image in the frequency domain:

$$\hat{f}_{v_1,v_2} \implies \hat{f}_{\kappa,\lambda},$$
$$|\hat{\mathbf{F}}| = [|\hat{f}(\kappa, \lambda)|],$$
$$\kappa \in \{0, 1, \cdots, M_u - 1\} \quad \lambda \in \{0, 1, ..., M_v - 1\}$$

All discrete images |F^| are represented with Ng levels of quantification and normalized so that $0 \leq f^\wedge (\kappa,\lambda) \leq 2^{Ng}$ - 1) .

The Fourier analysis is used here for the characterization of the stripe structures depicted in a pattern F. This pattern can also be interpreted as an observation window of the stripe structure to analyze. From signal theory it is known that limiting the representation of a signal s to characterize induces a bias of the spectral representation of s. This bias is all the more important as the size of the observation window is limited. In the case of stripe pattern characterization this means that the resolution in the frequency domain is directly linked to the size of the pattern in the space domain. This implicates that the resolution in the frequency domain equals 1/M$_u$ along the v$_1$-axis and 1/M$_v$ along the v$_2$-axis.

For a texture analysis 80 with the Fourier transform 90 different parts of the frequency spectrum may be used for classification purposes. The characterization of the image pattern F is based on the Fourier power spectrum P which is defined as the square of the spectral's magnitude |F^|. P is a matrix of same size as matrix F^, P(κ,λ) is the value of the power spectrum at position (κ,λ) The following definition may be used:

$$\mathbf{P} = |\hat{\mathbf{F}}|^2$$
$$\mathbf{P}(\kappa, \lambda) = |\hat{f}(\kappa, \lambda)|^2, \quad \kappa \in 0, 1, \cdots, M_u - 1; \quad \lambda \in 0, 1, ..., M_v - 1$$

The power spectrum may be used as an image signature for the discrimination of different types of stripe images. The radial and the angular spectral distributions may be considered, saying that the former is sensitive to texture coarseness and the latter to texture directionality. Also the distributions corresponding to the principal spectral image axes, the v$_1$- and v$_2$-directions may be used.

Using different parts of the power spectrum it can be observed that some regions may be more discriminative or representative of certain classes of stripe images. Such images are characterized by a vertical pattern whose disturbances are synonymous of defective surfaces. Hence, isolating the regions of the power spectrum which correspond to the vertical stripe pattern for the computation of the characteristic features will lead to better classification rates.

One embodiment of the invention uses a Fourier-based classification with a total number of 33 features 90 corresponding to the average value of power spectrum regions. There are 8 radial regions with P$_{r1,r2}$, 10 directional regions with P$_{θ1,θ2}$, 5 horizontal regions with P$_{v1,v2}$ and 10 vertical regions with P$_{u1,u2}$:

$$\overline{\mathbf{P}}_{r_1,r_2} = \sum_{\substack{r_1^2 \leq \kappa^2 + \lambda^2 < r_2^2 \\ 0 < \kappa < \frac{M_u}{2}; 0 < \lambda < \frac{M_v}{2}}} |\hat{f}(\kappa, \lambda)|^2 \qquad \overline{\mathbf{P}}_{v_1,v_2} = \sum_{0 < \kappa < M_u; v_1 < \lambda < v_2} |\hat{f}(\kappa, \lambda)|^2$$

$$\overline{\mathbf{P}}_{\theta 1,\theta 2} = \sum_{\substack{\theta_1 \leq tan^{-1}(\lambda/\kappa) < \theta_1 \\ 0 < \kappa < \frac{M_u}{2}; 0 < \lambda < \frac{M_v}{2}}} |\hat{f}(\kappa, \lambda)|^2 \qquad \overline{\mathbf{P}}_{u_1,u_2} = \sum_{u_1 < \lambda < u_2; 0 < \kappa < M_v} |\hat{f}(\kappa, \lambda)|^2$$

The number of computed features is independent of the size of the image pattern. Mathematical formulation of feature vector c$_F$ ∈ R$^{33}$ is as follows:

$$c_F = \{\{\overline{P}_{r1,r2}\}, \{\overline{P}_{\theta1,\theta2}\}, \{\overline{P}_{v1,v2}\}, \{\overline{P}_{u1,u2}\}\}, \quad c_F \in \mathbb{R}^{33}$$

with

$$\{\overline{P}_{r1,r2}\} \in \mathbb{R}^8, \{\overline{P}_{\theta1,\theta2}\} \in \mathbb{R}^{10}, \{\overline{P}_{v1,v2}\} \in \mathbb{R}^5, \{\overline{P}_{u1,u2}\} \in \mathbb{R}^{10}$$

and

$$(r_1; r_2) = (jr; (j+1)r), \quad r = \left(\frac{M_u^2}{2} + \frac{M_v^2}{2}\right)/8, \quad j = \{0, ..., 7\}$$

$$(\theta_1; \theta_2) = (j\theta; (j+1)\theta), \quad \theta = 2\pi/10, \quad j = \{0, ..., 9\}$$

$$(v_1; v_2) = (jv; (j+1)v), \quad v = \frac{M_v}{2}/5, \quad j = \{0, ..., 4\}$$

$$(u_1; u_2) = (ju; (j+1)u), \quad u = \frac{M_u}{2}/10, \quad j = \{0, ..., 9\}$$

The DFT (Discrete Fourier Transform) made the spectral analysis of discrete images possible, by decomposing the image function into a sum of finite sinusoids. However, with the major drawback that if it permits a good spatial resolution it is not possible in the same time to have a good resolution in the frequency domain, this phenomena is known as the Heisenberg inequality or uncertainty principle.

An improvement in the space-frequency representation was achieved with the wavelet analysis 92. This signal decomposition method is based on a lightly different concept than the frequency: the concept of scale. Instead of considering a window of constant size shifted at different positions in the image, the wavelets have the same morphology (they are all similar but differ from their size). The wavelet decomposition is a multi-resolution approach and consists of writing an image signal into a superposition of scaled and translated wavelets.

The main difference from the Fourier technique 90 is that the wavelets 92 can be adapted to the size of the searched image characteristics: they are large for low frequencies (high spatial resolutions) and small for high frequencies (low spatial resolutions). This adaptation capacity of the wavelets is used for the analyzing of the information content of an image information and is called the multiresolution procedure.

Orthonormal wavelet decomposition is equivalent to a pyramidal decomposition using quadrature mirror filters (QMF). This definition is the base for the Fast Wavelet Transform (FWT) algorithm. With a focus on the decomposition of two-dimensional discrete signals f(u,v) of $L^2(R^2)$ vector space of square-integrable two-dimensional functions a two-dimensional scaling function $\xi(u,v) = \xi(u)\xi(v)$ (the father wavelet) and $\varphi(u)$ one-dimensional bases wavelet (the mother wavelet) associated with the scaling function $\xi(u)$ may be considered.

Calling r the data reduction factor, $2^r$ the scale or resolution factor, $A_{2r}$ is the linear discrete operator which approximates f(u,v) at resolution $2^r$. The difference of information between $A_{2r+1}f$ and $A_{2r}f$ is given by the three detail images $D^1_{2r}f$ (high frequencies in vertical direction), $D^2_{2r}f$ (high frequencies in horizontal direction) and $D^3_{2r}f$ (high frequencies in horizontal and vertical direction).

The discrete wavelet transform (DWT) at level r + 1 of function $f^r(u, v)$ at level r is written as follows:

$$
\begin{aligned}
f^{r+1}(u,v) &= DWT(f^r(u,v)) \\
&= A_{2^r}f + D^1_{2^r}f + D^2_{2^r}f + D^3_{2^r}f
\end{aligned}
$$

Approximation and detail images $A^{2r}f$, $D^1_{2r}f$, $D^2_{2r}f$, $D^3_{2r}f$ are also called the wavelet and expansion coefficients.

For each level, the wavelet coefficients are obtained by convolutions of input image f(u,v) with two one-dimensional filters: h a lowpass filter and g a highpass filter, with $g(n) = (-1)^{1-n} h(1-n)$.

The classification methodology with wavelets comprises a wavelet decomposing each image. The energy measure of the four subband images $A^2_r f$, $D^1_{2_r} f$, $D^2_{2_r} f$ and $D^3_{2_r} f$ for each decomposition level r is used as signature for each image. For each level r (r $\geq$ 1) the four energy values are as follows:

$$E(r, A) = \sum_{\substack{0 \leq x < M_u/2^r \\ 0 \leq y < M_v/2^r}} (A_{2^r} f)^2 \quad E(r, D^1) = \sum_{\substack{0 \leq x < M_u/2^r \\ 0 \leq y < M_v/2^r}} (D^1_{2^r} f)^2$$

$$E(r, D^2) = \sum_{\substack{0 \leq x < M_u/2^r \\ 0 \leq y < M_v/2^r}} (D^2_{2^r} f)^2 \quad E(r, D^3) = \sum_{\substack{0 \leq x < M_u/2^r \\ 0 \leq y < M_v/2^r}} (D^3_{2^r} f)^2$$

Unlike the Fourier transform, which just utilizes the sine and cosine as basis functions, each new wavelet family brings its own set of new basis functions. For the purpose of evaluating the classification of stripe image patterns using different types of textural features one wavelet family may be applied, for example the orthogonal wavelet filters, which were initially proposed for texture classification.

The performance measures of a set of features are mainly evaluated by means of the rate $C_P$ of correctly classified patterns. This detection rate is computed for different classification algorithms, which are the Naive Bayes, the One-Nearest-Neighbor and Three-Nearest-Neighbor methods. As classification procedures a 10-fold cross-validation and a Leaving-One-out method may be applied. Best classification results are obtained when an optimized Fourier textural feature set is used. In that case the general detection rate CP is of 87.9 % in case of 10-fold cross validation and 88.8 % in case of leaving-one-out procedure is concerned.

Adaptive features 64 (stripe-based features 82 and adaptive fringe features 102) characterizing the disturbances of the depicted stripe structures which are synonymous of defective or non-defective surfaces will be defined in the subsequent sections. For a visual human system, the interpretation of these stripe disturbances related to the type of the recorded surface is an easy task. The human vision system can even recognize which kind of defective surface is represented.

Based on the recorded stripe image patterns, a set of specific stripe features (stripe-based features 82) is introduced. The computation principle of these features encompasses the accurate segmentation of the bright and dark stripe structures and the computation of the specific stripe features based on the geometrical and the grey level properties of these structures. A classification methodology is used to evaluate how far the involved stripe features are adapted to the problem of bright and dark stripe structures characterization. Several feature sets corresponding to different parameter settings may be used. Using an optimal setting, best rates CP = 88.9 % with a 10-fold cross validation and CP = 88.4 % is case of a leavingone-out procedure may be reached. This result is similar to the classification result using the optimized Fourier textural feature set.

The feature extraction component plays an important role in a machine or a human vision processing system. It is the art to interpret the contents of an image representing the scene to inspect. The resulting stripe image patterns contain all the relevant information to identify and to discriminate 3D and 2D defects. The same reference images as depicted in Fig. 6 will be used to describe the whole characterization process.

The segmentation and the classification of the stripe image patterns of Figure 6 into the three distinct classes $\{\Omega_A, \Omega_{R,3D}, \Omega_{R,2D}\} \in \Omega$ is a basic task for the human vision process. We automatically retrieve the relevant characteristics from the stripe images to group similar patterns and dissociate different ones. So we instinctively segment and group similar stripe disturbances according to their proximity or similarity for example. The distinction of the "low contrast" pattern with the others of Figure 6, is made possible by comparing the values of the bright and dark stripe structure grey levels. Instead, the horizontal distance between the bright stripes is obviously an interesting characteristic to discriminate the "vanishing" defective surface of Figure 6.

Concerning the "circular mid-size" and "circular huge-size" defective surfaces of Figure 6, the geometry of the bright structure may be a relevant discriminating information. However, further characteristics are certainly necessary as the bright stripe disturbances of defective 3D surfaces is similar to the disturbances induced by non-optimal recording conditions or non-critical 3D defects, see patterns "symmetrical deviation" and "circular small-size" of Figure 6.

The adaptive feature method 64 retrieves characteristic features for the classification of non-defective surfaces and defective 3D and 2D surfaces. The originality of the method is that both bright and dark stripe structures are characterized using different geometry-based 94, intensity-based and/or statistic-based 99 features extracted from stripe images.

The first step of the adaptive feature characterization algorithm consists of the segmentation at pixel level 100 of the bright and dark stripe structures. Within the field of interferometrical holography a morphological approach for the segmentation of interferometrical patterns depicted in fringe images is applied. The two-steps segmentation process consists of the binarization of the image and then in consecutive closing and opening morphological operations to retrieve the skeleton at pixel level of the fringe structures. These algorithms are commonly named thinning methods, as their principle is to retrieve the skeleton of a pattern by successively deleting layers of pixel on the boundary of this pattern.

Concerning the depicted bright structures, they are characterized by high discrepancies in their grey level values. As these kinds of perturbations structure are unavoidable, the stripe segmentation procedure should overcome this difficulty. The computation of the stripe structure represents the first step of the whole characterization process of the stripe structures. Hence, the accuracy of this preliminary process is determinant for the further operations.

The adapted method according to embodiments of the invention retrieves the position of the stripe structures at pixel-level 100. This method is computed for each of the $M_v$ lines of an image pattern F and for the bright stripes and the dark stripes independently.

The depicted bright and dark stripe structures in an image pattern F are considered to have an approximately period of $d_{P,px}$ pixel. The minimum grey value difference between two consecutive positions of a bright stripe and a dark stripe along the u-axis of the image pattern are considered to be above a certain threshold θg. Concerning the retrieval of the bright stripe structure and for a certain image line, the method comprises a first selection of all the pixels whose grey value differences with the pixels situated at half the period along the u-direction of the image are above a threshold θg. The same method is used for the selection of the dark stripe structure, except that the grey value differences shall be below a threshold θg. The results of the bright and dark stripe selection process is written in a matrix $F^{SISCsegm.}$. Pixel-level segmentation results in $F^{SISCsegm.}$ are grey coded: maximum level 255 stands for the bright stripes, minimum level 0 for the dark stripes, and 100 for the remaining non-selected elements. Mathematical expression of the segmentation procedure is as follows:

$$\mathbf{F}^{\text{SISCsegm.}} = \begin{cases} 255 & \text{if } f(k,l) - f(k,l+d_{P,px}/2) \geq \theta_g \\ & \text{and } f(k,l) - f(k,l-d_{P,px}/2) \geq \theta_g \\ 0 & \text{if } f(k,l) - f(k,l+d_{P,px}/2) \leq \theta_g \\ & \text{and } f(k,l) - f(k,l-d_{P,px}/2) \leq \theta_g \\ 100 & \text{otherwise} \end{cases} \quad \begin{array}{l} k \in \{0,1,\cdots,M_u-1\}\} \\ l \in \{0,1,\cdots,M_v-1\}\} \end{array}$$

This selection process is followed by a thinning operation, so that for each image line, each bright and dark stripe is characterized by one pixel element. The pixel-level segmentation may also be achieved by using a morphological thinning algorithm.

When the stripe structure is depicted with a high grey level variation, as this is the case for an image of "low contrast", the use of the same binarization threshold on the whole image pattern may lead to a non complete segmentation of the bright and dark stripe structure.

Hence, applying thinning methods on such non perfectly segmented images can induce segmentation errors. An adapted procedure is therefore more appropriate and leads to a nearly perfect segmentation of the bright and dark stripes in the image. The problem of high grey level variations of the stripe structures may be overcome when an appropriate threshold is used.

The interpretation of the stripe disturbances relies on an accurate determination of characteristic features. For this task, the position of each bright stripe and dark stripe will be estimated with high accuracy using sub-pixel methods 96.

Algorithms for sub-pixel level 96 segmentation are a "Gaussian approximation", a "Center-of-Mass computation" and a "parabolic estimation" which are based on the assumption that the grey levels of the bright peaks can be modeled by a mathematical function, such as a gaussian or a parabolic distribution.

Further methods are a simple "linear interpolation" of the grey levels and the first derivative computation of a gaussian, called the "Blais-and-Rioux" operator.

Best performances, in the presence of simulated additive noise, may be achieved by the Blais-and-Rioux estimators of length 2 and 4, which give best detection performances. Concerning the peak detection results with a saturated sensor, i.e. when the magnitude of the grey levels is near some limiting values, the Blais-and-Rioux estimator of length 4 leads to minimal peak detection errors. This relates to stripe widths up to 2 pixels and 1 to 3 pixel saturated regions. These values, which define the size of the stripes, correspond to the geometry of the considered vertical stripes structures recorded by the industrial system. Such a sub-pixel method may also be applied for the detection of the maximum gradients defining the stripe boundaries.

For the sub-pixel features 96 the Blais-and-Rioux and the Center-of-Mass detectors may be applied. Due to possible recording disturbances, the recording set-up may be adjusted so that the stripe structures are depicted in the saturation mode of the sensor. The consequence is that the bright stripes may have a large width of 2 to 3 pixels. Hence, to cover the whole image section defining a bright stripe, but also a dark stripe, detectors with sizes of 5 pixels and 7 pixels may be considered.

In the following we give the expressions of Center-of-Mass and the Blais-and-Rioux detectors of lengths 5 and 7, named CM5, CM7 and BR5, BR7. For clarity of the mathematical expression we define the function $f_u(v)$ as the one-dimensional discrete representation of an horizontal image line of length $M_u$ with $f_k(1)$ being the $1^{th}$-element of the line k.

The Center-of-Mass algorithm assumes that the intensity values across a bright stripe is conform to a gaussian distribution. Hence, the sub-pixel position is computed by a weighted-average method. The estimated sub-pixel positions of a bright stripe at image position (k, 1) for the CM5 and CM7 operators, $^{CM5}\hat{l}^*_{bright}$ and $^{CM7}\hat{l}^*_{bright}$ are as follows:

$$^{CM5}\widehat{l}^*_{bright} = f_k(l) + \frac{f_k(l+2) + f_k(l+1) - f_k(l-1) - f_k(l-2)}{f_k(l-2) + f_k(l-1) + f_k(l) + f_k(l+1) + f_k(l+2)}$$

$$^{CM7}\widehat{l}^*_{bright} = f_k(l) + \frac{f_k(l+3) + f_k(l+2) + f_k(l+1) - f_k(l-1) - f_k(l-2) - f_k(l-3)}{f_k(l-3) + f_k(l-2) + f_k(l-1) + f_k(l) + f_k(l+1) + f_k(l+2) + f_k(l+3)}$$

Concerning the dark stripes, it may be considered, as for the bright stripes that their intensity distribution along an image line is gaussian like. Thus, the same Center-of-Mass algorithms can be used for the determination of dark stripes at sub-pixel positions. Before applying such an algorithm, we first transform the grey values defining a dark stripe region. This elementary transformation consists of computing the absolute value of the difference between the maximum intensity value of 255 and the dark stripe grey values. Mathematical expressions of the estimated sub-pixel positions of a dark stripe at image position (k, 1) for the CM5 and CM7 operators, $^{CM5}\hat{l}^*_{dark}$ and $^{CM7}\hat{l}^*_{dark}$, are as follows:

$$^{CM5}\widehat{l}^*_{dark} = f_k(l) + \frac{f_k^\dagger(l+2) + f_k^\dagger(l+1) - f_k^\dagger(l-1) - f_k^\dagger(l-2)}{f_k^\dagger(l-2) + f_k^\dagger(l-1) + f_k^\dagger(l) + f_k^\dagger(l+1) + f_k^\dagger(l+2)}$$

$$^{CM7}\widehat{l}^*_{dark} = f_k^\dagger(l) + \frac{f_k^\dagger(l+3) + f_k^\dagger(l+2) + f_k^\dagger(l+1) - f_k^\dagger(l-1) - f_k^\dagger(l-2) - f_k^\dagger(l-3)}{f_k^\dagger(l-3) + f_k^\dagger(l-2) + f_k^\dagger(l-1) + f_k^\dagger(l) + f_k^\dagger(l+1) + f_k^\dagger(l+2) + f_k^\dagger(l+3)}$$

where

$$f_k^\dagger(l) = |255 - f_k(l)|$$

The Blais-and-Rioux method is based on the convolution of image grey values with a derivative operator. The sub-pixel position is determined with a local linear interpolation. The expressions of the derivative functions $^{BR5}f_k^{der}$ and $^{BR7}f_k^{der}$ using the BR5 and BR7 operators applied to image position (k, 1), are as follows:

$$^{BR5}f_k^{der}(l) = -f_k(l-2) - f_k(l-1) + f_k(l+1) + f_k(l+2)$$

$$\mathbf{BR7}\, f_k^{der}(l) = -f_k(l-3) - f_k(l-2) - f_k(l-1) + f_k(l+1) + f_k(l+2) + f_k(l+3)$$

Finding the position of a signal's maximum is equivalent to find the zero-crossing of the signal's derivative. Hence, the determination of the sub-pixel of a bright stripe is the result of a local linear interpolation at the zero-crossing of the derivative. The equation of the sub-pixel positions of bright stripes using operators BR5 and BR7 on image position $(k, l)$, $^{BR5}l^*_{bright}$ and $^{BR7}l^*_{bright}$, are as follow:

$$\mathbf{BR5}\,\widehat{l}^*_{bright} = f_k(l) + \frac{\mathbf{BR5}\, f^{der}(l)}{\mathbf{BR5}\, f^{der}(l) - \mathbf{BR5}\, f^{der}(l+1)}$$

$$\mathbf{BR7}\,\widehat{l}^*_{bright} = f_k(l) + \frac{\mathbf{BR7}\, f^{der}(l)}{\mathbf{BR7}\, f^{der}(l) - \mathbf{BR7}\, f^{der}(l+1)}$$

where $^{BM5}f^{der}(l) \geq 0$ $^{BM5}f^{der}(l+1) < 0$
and $^{BR7}f^{der}(l) \geq 0$ $^{BR7}f^{der}(l+1) < 0$

As for the Center-of-Mass method, the same transformation to dark stripes grey levels may be applied. Hence, the mathematical expressions of the estimated sub-pixel positions dark stripes using operators BR5 and BR7 on image position $(k, l)$, $^{BR5}l^{\wedge*}_{dark}$ and $^{BR7}l^{\wedge*}_{dark}$, are as follows:

$$\mathbf{BR5}\,\widehat{l}^*_{bright} = f_k^{\dagger}(l) + \frac{\mathbf{BR5}\, f^{\dagger der}(l)}{\mathbf{BR5}\, f^{\dagger der}(l) - \mathbf{BR5}\, f^{\dagger der}(l+1)}$$

$$\mathbf{BR7}\,\widehat{l}^*_{bright} = f_k^{\dagger}(l) + \frac{\mathbf{BR7}\, f^{\dagger der}(l)}{\mathbf{BR7}\, f^{\dagger der}(l) - \mathbf{BR7}\, f^{\dagger der}(l+1)}$$

where $^{BR5}f^{\dagger der}(l) \geq 0$ $^{BR5}f^{\dagger der}(l+1) < 0$
and $^{BR7}f^{\dagger der}(l) \geq 0$ $^{BR7}f^{\dagger der}(l+1) < 0$
with

$$\mathbf{BR5}\, f^{\dagger der}(l) = -f_k^{\dagger}(l-2) - f_k^{\dagger}(l-1) + f_k^{\dagger}(l+1) + f_k^{\dagger}(l+2)$$

$$\mathbf{BR7}\, f^{\dagger der}(l) = -f_k^{\dagger}(l-3) - f_k^{\dagger}(l-2) - f_k^{\dagger}(l-1) + f_k^{\dagger}(l+1) + f_k^{\dagger}(l+2) + f_k^{\dagger}(l+3)$$

and

$$f_k^{\dagger}(l) = |255 - f_k(l)|$$

A key idea of embodiments of the invention is to utilize the deformations of the depicted stripe structures to automatically classify the recorded surface as acceptable, 3D defective or 2D defective. Hence, the first step of the surface quality control comprises the automatic segmentation of the stripe patterns. The bright and a dark structures of such a pattern can be automatically extracted be means of sub-pixel segmentation methods. A next step comprises the characterization of these structures.

For the description of the stripe features 82 the following notations will be used. We define the notations for the bright stripes (B), same notations hold for the dark stripes, in that case (B) should be replaced with (D).

A bright stripe in an image pattern F of size $M_u \times M_v$ is represented with a list $^{(B)}S^i$. $^{(B)}N$ is the number of bright stripes in the image pattern , $^{(B)}n^i$ is the number of elements of list $^{(B)}S^i$, whose elements $^{(B)}S^i_j$ are defined with a position along the u-axis and the v-axis of F and with a grey value g. Following notations holds:

$$
\begin{aligned}
{}^{(B)}S^i &= \{{}^{(B)}s^i_j\}, \\
{}^{(B)}s^i_j &= \{ \quad {}^{(B)}k^i_j \quad ; \quad {}^{(B)}l^i_j \quad ; \quad {}^{(B)}g^i_j \quad \} \\
i &\in \{1, \cdots, {}^{(B)}N\} \quad j \in \{1, \cdots, {}^{(B)}n^i\} \\
k &\in \{0, 1, \cdots, M_u - 1\} \quad j \in \{0, 1, \cdots, M_v - 1\}
\end{aligned}
$$

The information whether an object is defective or not, may be contained in the position as well as in the grey level distributions of the bright and dark stripes. Hence, specific features characterizing the bright and dark stripe disturbances depicted in an image F may be extracted.

For the description of the feature computation and without loss of generality, the following two simplifications may be made. First, only one possible class of stripe disturbances is displayed in each image pattern F. Second, feature computation is applied to the whole image F pattern depicting the stripe disturbances.

Feature $c_m, m = \{1, ..., N_c\}$ is the average result of an operation applied to a bright or dark stripe element $^{(B)}s^i_j$ or $^{(D)}S^i_j$. $N_c$ is the length of vector c and the number of extracted features. Operator $O^{ij}_m$ is applied to a bright element $^{(B)}s^i_j$ or a dark element $^{(D)}S^i_j$, by considering a local window $w_F$, centered on $^{(B)}S^i_j$ or $^{(D)}S^i_j$. The size of $w_F$ can be fixed or variable.

Following equations for feature $C_m$ calculation hold (the notations are given for the bright stripes (B), same notations holds for the dark stripes, in that case (B) should be replaced with (D)):

$$
c_m = \frac{1}{\sum_{i=1}^{(B)}N\, {}^{(B)}n^i} \sum_{i=1}^{(B)}N \sum_{j=1}^{(B)}n^i O^{ij}_m({}^{(B)}s^i_j \quad | \quad w_F \quad \text{fixed})
$$

$$
c_m = \frac{1}{\sum_{i=1}^{(B)}N\, {}^{(B)}n^i} \sum_{i=1}^{(B)}N \sum_{j=1}^{(B)}n^i O^{ij}_m({}^{(B)}s^i_j \quad | \quad w_F \quad \text{variable})
$$

For simplification purposes, operations $O^{ij}_m(^{(B)}S^i_j$ I fixed)) and $O^{ij}_m(^{(B)}S^i_j$ | I variable)) are also named $O^{ij}_m$ and $O^{ij}_m$. In that case, the value of m indicates if the operation considers the local window $w_F$ to be fixed or variable.

From the stripe-based features 82 a set of three geometry-based features 94 and one intensity-based feature 98 especially developed and adapted for the characterization of the bright and the dark stripe structures whose disturbances are synonymous of defective surfaces may be selected. These eight features are extracted from the grey levels and from the positions of the bright and dark stripe structures.

Hence, for each image pattern F, a set of 8 different specific values may be computed. These 8 values are related to the direction, the maximum and minimum distances of two consecutive stripes and the grey levels of the bright and the dark stripe structures.

The notations and detailed expressions of the 8 operators $O^{ij}_{01}$ to $O^{ij}_{08}$ computed for a bright pixel element $^{(B)}S^i_j$ and for a dark pixel element and $^{(D)}S^i_j$, are defined as follows (these operators define the features c01 to c08):

| | |
|---|---|
| $^{(B)}S^i$ and $^{(D)}S^i$ : | bright and dark stripes characterized By operation $O^{ij}_m$ |
| $^{(B)}S^i_j$ and $^{(D)}S^i_j$: | elements of $^{(B)}S^i$ and $^{(D)}S^i$ on which $O^{ij}_m$ is applied |

(continued)

| | |
|---|---|
| $w_F$ : | window defining the image region where the operator $O^{ij}_m$ is applied, the size of $w_F$ can be fixed or variable |
| $^{(B)}k^i_s$, $^{(B)}k^i_e$; $^{(B)}k^i_s$, $^{(B)}k^i_e$ : | positions along $\vec{u}$ of first and last elements of $^{(B)}S^i$ and $^{(D)}S^i$ in $w_F$ |
| $\text{dist1}_{\vec{u}\,(^{(B)}s^i_j)}$ $\text{dist1}_{\vec{u}\,(^{(D)}s^i_j)}$ , : | distance from $^{(B)}s^i_j$ to next bright and dark stripe element along direction $\vec{u}$ |
| $\text{dist2}_{\vec{u}\,(^{(B)}s^i_c)}$ $\text{dist2}_{\vec{u}\,(^{(D)}s^i_c)}$ , : | distance from $^{(B)}s^i_c$ to next bright and dark stripe element in the opposite direction of $\vec{u}$ |

**(01), (02): intensity (grey level)**

of $^{(B)}S^i_j$ and $^{(D)}S^i_j$, $w_F$ fixed

$$O^{ij}_{01} = {}^{(B)}g^i_j$$

$$O^{ij}_{02} = {}^{(D)}g^i_j$$

**(03), (04): minimum distance**

of $^{(B)}S^i$ and $^{(D)}S^i$, $w_F$ fixed

$$O^{ij}_{03} = \min[\text{dist1}_{\vec{k}\,(^{(B)}s^i_j)}; \text{dist2}_{\vec{k}\,(^{(B)}s^i_j)}]$$

$$O^{ij}_{04} = \min[\text{dist1}_{\vec{k}\,(^{(D)}s^i_j)}; \text{dist2}_{\vec{k}\,(^{(D)}s^i_j)}]$$

**(05) , (06) : maximum distance**

of $^{(B)}S^i$ and $^{(D)}S^i$, $w_F$ fixed

$$O^{ij}_{05} = \max[\text{dist1}_{\vec{k}\,(^{(B)}s^i_j)}; \text{dist2}_{\vec{k}\,(^{(B)}s^i_j)}]$$

$$O^{ij}_{06} = \max[\text{dist1}_{\vec{k}\,(^{(D)}s^i_j)}; \text{dist2}_{\vec{k}\,(^{(D)}s^i_j)}]$$

**(07), (08): deviation**

of $^{(B)}S^i$ and $^{(D)}S^i$, $w_F$ variable

$$O_{07}^{ij} \quad = \quad |(^{(B)}k_e^i - {}^{(B)}k_s^i)|$$

$$O_{08}^{ij} \quad = \quad |(^{(D)}k_e^i - {}^{(D)}k_s^i)|$$

These 8 features 82 may be defined for the characterization of vertical periodical stripe structures. These were obtained by projecting a structured light pattern on the surface to be inspected.

Within the field of optical non-destructive testing, image patterns obtained with interferometrical methods result in similar bright and dark fringe structures 102. Similar to the interpretation of the stripes, the geometry of the fringes gives an important information as far as the quality control of the object under inspection is concerned.

Specific features for the interpretation of such fringe structures are the adaptive fringe features 102. The characterization of the bright and dark stripes may be achieved by these adaptive fringe features 102, which may also comprise geometry-based 94, intensity-based 98 and/or statistic-based 99 features.

Holographic interferometry (HI) or speckle interferometry (SI) are optical non-destructive measurement methods using coherent light. Both techniques are based on the interpretation of interference fringe patterns. These interference patterns are produced by two interfering wave fields from the object recorded in two different positions or in two different stress states. Thus, interferometric methods can be applied to the detection and measurement of versatile defects such as strain fields or internal and surface flaws.

The application of interferometric techniques is therefore very manifold, as e.g. 3D measurement, material deformation measurement or surface inspection.

The majority of definitions of specific features for identification and classification purposes of patterns depicting bright and dark structures are proposed for applications using the coherent light technique.

Geometric features 94 characterizing the fault patterns may be used for the automatic detection of fringes in patterns representing defective object parts. Further on, a set of geometrical 94 and statistical 99 features may be applied for the interpretation of holographical interferometrical fringes 102, e.g. for medical purposes. Further methods are involving the wavelet or the Fourier transformations for the characterization of faults.

The classification of faults using interferometric images may also be based on a direct interpretation of the structures in the image. A set of features for the description of one fringe or a set of fringes depicted in a local area may be applied.

The local area which is used for the computation of the features may be positioned on the skeleton image pixels 100 or may be positioned on a sub-pixel 96 pre-segmented bright stripe element. The latter segmentation approach is more adapted to the considered stripe images.

Only the bright fringes may be characterized or both bright and dark structures may be characterized. Some features may be specially defined for particular types of fringe structures, as the "eyes" or the "eyes chains" structures.

Fringe features (adaptive fringe features 102) may be applied for the characterization of both bright and dark structures depicted in the stripe pattern. For example, four geometry- 94 and two statistic-based 99 features may be used for the characterization of bright fringe patterns, the characterization of the dark stripes using these fringe features 102 may not be addressed.

In one embodiment the first feature group describes the shape, the tangent direction, the curvature and the straightness of the bright fringes. Whereas the second feature group characterizes the length and the number of pixel elements defining the bright fringes in a window $w_F$. The length, curvature and shape features may be implemented according to the definitions given below, these are named F1, F2 and F3. The number of elements, straightness and tangent direction are related to the features named F4, F5 and F6.

The notations and detailed expressions of the 12 operators $O^{ij}_{09}$ to $O^{ij}_{20}$ computed for a bright pixel element $^{(B)}S^i_j$ and for a dark pixel element $^{(D)}S^i_j$, are defined as follows (these operators define the features $C_{09}$ to $C_{20}$) :

**(09), (10): tangent direction**

of $^{(B)}S^i$ and $^{(D)}S^i$ at $^{(B)}s^i_j$ and $^{(D)}s^i_j$, $w_F$ fixed

$$O_{09}^{ij} \quad = \quad \tan^{-1}(^{(B)}s_j^i)$$

$$O_{10}^{ij} = \tan^{-1}({}^{(D)}s_j^i)$$

**(11), (12): curvature**

of ${}^{(B)}S^i$ and ${}^{(D)}S^i$ at ${}^{(B)}S_j^i$ and ${}^{(D)}S_j^i$, $w_F$ fixed

$$O_{11}^{ij} = \tan'({}^{(B)}s_j^i)$$

$$O_{12}^{ij} = \tan'({}^{(D)}s_j^i)$$

**(13), (14): length**

of ${}^{(B)}S^i$ and ${}^{(D)}S^i$, $w_F$ variable

$$O_{13}^{ij} = \text{length}_{w_F}({}^{(B)}S^i)$$

$$O_{14}^{ij} = \text{length}_{w_F}({}^{(D)}S^i)$$

**(15), (16): shape**

of ${}^{(B)}S^i$ and ${}^{(D)}S^i$, $w_F$ variable

$$O_{15}^{ij} = {}^{(B)}\text{dist}_{line}/{}^{(B)}\#_{w_F}$$

$$O_{16}^{ij} = {}^{(D)}\text{dist}_{line}/{}^{(D)}\#_{w_F}$$

**(17), (18) : straightness**

of ${}^{(B)}S^i$ and ${}^{(D)}S^i$, $w_F$ variable

$$O_{17}^{ij} = 1/({}^{(B)}\#_{w_F} - 1) \cdot \sum_{j=2}^{{}^{(B)}n^i} |\tan({}^{(B)}s_j^i) - \tan({}^{(B)}s_{j-1}^i)|$$

$$O_{18}^{ij} = 1/({}^{(B)}\#_{w_F} - 1) \cdot \sum_{j=2}^{{}^{(D)}n^i} |\tan({}^{(D)}s_j^i) - \tan({}^{(D)}s_{j-1}^i)|$$

**(19), (20): number of elements**

of ${}^{(B)}S^i$ and ${}^{(D)}S^i$ in $w_F$ variable

$$O_{19}^{ij} = {}^{(B)}\#_{w_F}$$

$$O_{20}^{ij} = {}^{(D)}\#_{w_F}$$

The classification of the stripe image patterns using adaptive features 64 may be achieved by retrieving 20 different features $C_{01}$ to $C_{20}$, which characterize the bright and dark stripe structures depicted in the images.

The evaluation of these 20 adaptive features $C_{01}$ to $C_{20}$ 64 may be based on four different parameter settings. Two sets involve the CM5 and BR5 sub-pixel operators, whereas two further sets consider different values of local window sizes $d_{wF}$.

Compared to classification results of the textural features 80, classification results for adaptive features 64 are similar as far as a 10-F approach or a LoO procedure is concerned. The Nearest-Neighbor classifiers may outperform the NB approach. Depending on a window size for feature selecting better classification rates may be achieved. As far as the influence of the size of the image on the classification results is concerned, similar classification results may be achieved. Classification rates may decrease for image pattern of sizes of 128×128 pixels classified with a NB classifier.

The adaptive feature 64 method for the characterization of stripe image patterns is based on the computation of specific features for the characterization of the bright and the dark stripe structures depicted in the images. Classifying 30 the image 24 using the six geometry-based 94 and two intensity-based 98 features (01), (02), (03), (04), (05), (06), (07), (08) in combination with the twelve fringe-based 102 features (09), (10), (11), (12), (13), (14), (15), (16), (17), (18), (19), (20) with a LoO classification method lead to best classification rates and lowest risk, $C_P$ = 88.4 % and $C_R$ = 0.11.

A Classifying 30 method of the image 24 by textural features 80 using the ten optimized Fourier-based 90 features $P_{\theta1\theta2}$ results in similar classification results. The best classification rate and lowest risk using these Fourier-based features are $C_P$ = 88.8 % and $C_R$ = 0.11 when a LoO classification method is considered.

The difference between the optimized transformation- 66 and the optimized adaptive 64 approaches lies in the detection of the defective 2D surfaces and the false alarm rate. In case of a LoO procedure, classification of 2D surfaces is better when the involved adaptive features 64 are used, $C_{D,2D}$ = 92.3 %. A rate of $C_{D,2D}$ = 89.2 % may be obtained using the textural features 80. Nevertheless, the false alarm rate is higher for the adaptive method 64, $C_{F,3D2D}$ = 9.4 %, than for the transformation approach 66, $C_{F,3D2D}$ = 7.2 %.

The textural features 80 and the adaptive features 64 described above are optimally suited for the characterizations of stripe patterns. Indeed, none of the other textural approaches (84, 86, 92) outperforms the adaptive method 64 described above, except the Fourier approach 90 which leads to similar classification rates.

The fact that the 10 optimized Fourier features $P_{\theta1\theta2}$ lead to similar results as the proposed 20 adaptive features (01)-(20) shows that as far as the disturbances of vertical and periodical patterns have to be classified, the directional regions of the power spectrum are perfectly adequate for their characterization. Hence, a further step consists of the improvement of the reached classification results by combining these two optimized Fourier and the adaptive feature sets.

Embodiments of the invention provide such a combination of features.

However, the best classification results using the adaptive features 64 may be obtained for adapted sizes of image patterns, which are hand-segmented so that only the disturbed stripe structure to characterize is depicted in the pattern.

Hand-segmenting each image region before its classification is, of course, not possible in terms of a fully automatical inspection process, so that unsupervised and adapted segmentation procedures should be defined. A solution may be to segment the image patterns to classify by means of sliding overlapping windows of constant sizes. The magnitude of the overlapping regions may be defined according to the specifications of the inspection task. Thus, in case of a classification methodology combining both feature sets (64, 66), the same image set $\Phi^{64^2}$ will be taken into account. Image patterns of 64 × 64 pixels are often considered by the computer vision community as far as sliding windows are concerned.

As far as the classification of stripe patterns is concerned, several textural feature sets 80 are tested and compared with an adaptive set of features 64, specially developed for this classification task. The results showed that the 10 directional Fourier features $P_{\theta1\theta2}$ and the 20 specific adaptive features (01)-(20) lead to the best classification results. In both cases the One-Nearest-Neighbour approach outperforms the two other involved classifiers, which are the Three-Nearest-Neighbour and the Naive-Bayes methods. These two feature sets were defined in the context of different feature retrieval approaches, the first using the repartitions of the spectral distributions, the second extracting specific geometrical and statistical characteristics directly from the stripe pattern. Concerning the reached classification results, both feature sets were tested separately, and gave nearly the same detection rates. The adaptive method 64 was slightly more sensitive concerning the detection of 2D defects with the negative effect of a slightly higher false alarm rate.

The question is whether more features will result in more discriminating power. Hence, embodiments of the invention prove that a combined approach, including both feature sets (64, 66), lead to an improvement of the classification rates.

In respect of the similar results reached with these two different feature sets, it is highly conceivable, that between these 30 features, resulting from the combination of the 10 textural features and the 20 adaptive features, a certain amount of irrelevant and redundant information is unavoidable. So that a further feature selection process will lead to an improvement of the whole classification process. Different feature subset selection methodologies may be applied to the combined 10 directional Fourier features and the 20 adaptive features to improve the classification rates.

In order to improve the reached classification rates, appropriate feature selection methods are used by embodiments of the invention. It is shown that by first combining the Fourier textural features and the adapted stripe features and then retrieving the most adequate subset, best classification results are reached. A rate of CP = 91.2 % may be reached.

The main value expressing the performance of a particular classification process is the percentage of correctly classified patterns $C_P$, expressed in percent. Following classification rates are also addressed: the percentage of correctly classified defective object surfaces $C_{D,3D2D}$ (true positive), the rate of wrongly classified non-defective object surfaces $C_{F,3D2D}$ (false positive) or the rates of correct classification of 3D and 2D defective object surfaces when only object surfaces of classes $\Omega_{R,3D}$ and $\Omega_{R,2D}$ are considered, $C_{D,2D}$ (true positive 3D) and 2D (true positive 2D).

As far as the industrial application is concerned, the performances of a classification procedure are expressed by means of the classification risk $C_R$, whose computation integrates the cost values. These were defined in accordance to the specifications of the industrial inspection task.

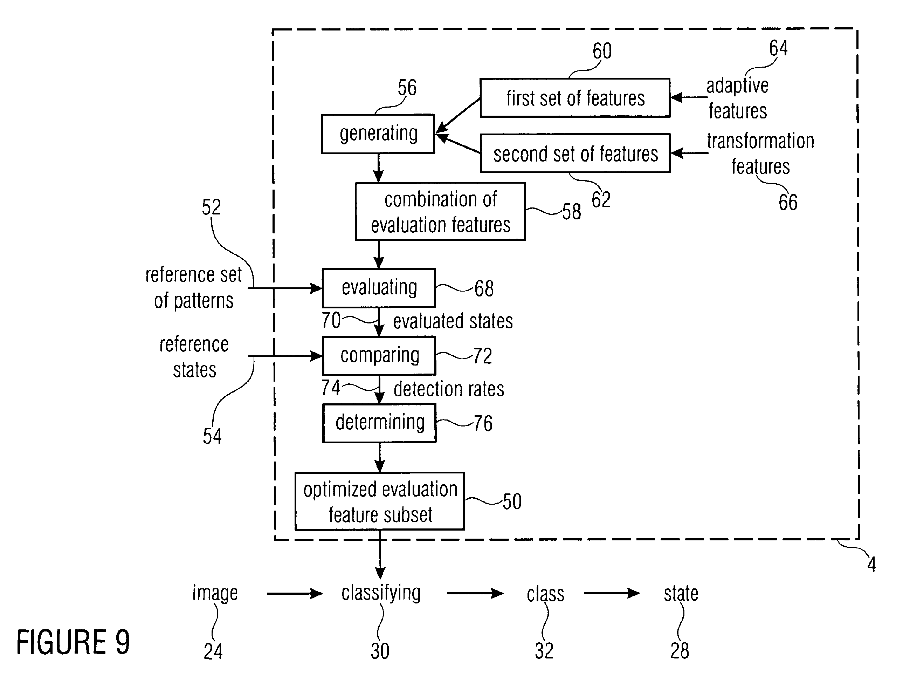

**Fig. 9** shows a diagram of a method 4 for selecting an optimized evaluation feature subset 50 for an inspection of free-form surfaces illuminated by a structured light on the basis of a reference set of patterns 52 depicting surface areas of free-form objects, wherein each pattern of the reference set 52 is associated to a defective or non-defective reference state 54 of the respective surface area of the free-form objects.

The method 4 comprises generating 56 a plurality of combinations of evaluation features 58, wherein each combination of evaluation features 58 comprises a first set of features 60 and a second set of features 62, wherein the first set of features 60 is selected from a first group of adaptive features 64 and wherein the second set of features 62 is selected from a second group of textural features 80. The first group of adaptive features 64 may comprise intensity-based features, geometry-based features and/or fringe-based features. The second group of textural features 80 may comprise transform-based features, structural features and/or statistical features.

The method 4 further comprises evaluating 68 each pixel or a subset of the pixels of the patterns of the reference set 52 with each combination of evaluation features 58 for obtaining an evaluated defective or non-defective state 70 of the respective surface areas.

The method 4 further comprises comparing 72 the evaluated defective or non-defective state 70 with the defective or non-defective reference state 54 for obtaining a detection rate 74 for each combination of evaluation features 58.

The method 4 further comprises determining 76 the optimized evaluation feature subset 50 based on the detection rates 74.

With the optimized evaluation feature subset 50 an image 24 may be classified 30 to obtain a class 32 indicating a defective or non-defective state 28 of the image 24. The classifying 30 may be a classifying 30 as described in Fig. 2. The optimized evaluation feature subset 50 may be used for a method 2 for inspecting a free-form surface illuminated by a structured light as depicted in Fig. 2. A combinational method for inspecting a free-form surface illuminated by a structured light comprising a method for selecting an optimized evaluation feature subset for an inspection of free-form surfaces may be applied.

Such a method for an optimized inspection of a free-form surface comprises the method 4 for selecting an optimized evaluation feature subset and the method 2 for inspecting a free-form surface 20 illuminated by a structured light 22, wherein the combination of evaluation features 26 corresponds to the optimized feature evaluation subset 50.

The optimized evaluation feature subset 50 may be determined by a maximum of the detection rates 74 of each combination of evaluation features 58, such that the best detection rate delivers the optimized evaluation feature subset 50. The optimized evaluation feature subset 50 may have less features than a combination of all of the features of the first set of features 60 and the second set of features 62.

Each pixel or a subset of the pixels of the patterns of the reference set 52 may be evaluated with each combination of evaluation features 58 until a stopping criterion is fulfilled. The stopping criterion may be fulfilled when all combinations of evaluation features have been evaluated or when a threshold is reached. The threshold may be a minimum number of features for the optimized evaluation feature subset 50, a maximum number of iterations for evaluating 68, a minimum value for the detection rate 74, a restriction of the number of backtracking or a condition that no higher detection rate 74 is determined.

Selecting the most relevant feature subset prior to learning can be beneficial for the classification task as it reduces the dimensionality of the data and may allow learning algorithms to run faster and more efficiently.

By applying a feature selection procedure to the combined set of 30 features, i.e. the 10 directional Fourier features $P_{\theta1\theta2}$ and the 20 specific adaptive features (01)-(20), the accuracy of the stripe pattern classification can be improved. The purpose of a feature selection process is the generation of a feature subset made of the most relevant information. This iterative procedure may be represented by four major parts.

The generation and evaluation of each new subset for each iteration. A stopping criterion and a result validation. Two different approaches of feature subset generation may be considered: filter and wrapper methods. The first method consists of filtering out the irrelevant data independently of the classification process. The second method uses the machine learning algorithms that will be employed for learning procedure. Similar feature search strategies can be applied in both cases. We distinguish between a forward selection (the process starts with no selected features), a backward elimination (the process starts with the complete subset) or a bidirectional search strategy which combines both methodologies and starts with a random subset of features.

The evaluation of the generated subset, i.e. its goodness, may be done according to a certain criterion. Two groups may be differentiated: the independent criteria and the dependent evaluation criteria. The first one is typically used in algorithms of filter models, whereas the second one is applied in wrapper-based feature selection models.

Independent criteria are based on the relations between the features eliminating highly correlated characteristics which are redundant for the prediction. Independent criteria use e.g. the distances between the features, as e.g. the Bhattacharyya distance or the Hausdorff distance. The information gain or the dependency between features are further independent criteria which are used by filter-based feature selection approaches. Concerning the dependent evaluation criteria, the evaluation and the optimization of the accuracy rate is done according to the performances of the machine learning algorithm using the selected feature subset. In case of small sets of reference patterns, a cross-validation procedure can often improve the evaluation determination.

It is difficult to predict which of the filter or the wrapper approaches would be more appropriate for a specific classification task. Dependent evaluation procedures may give better result than the independent approaches, as these procedures find features better suited to the learning algorithm. Nevertheless, their major drawback is that they incur higher computational costs as the whole learning procedure will be invoked at each selection step.

Another important parameter concerning an iterative feature selection procedure, is the stopping criterion. The simplest one is to finish the search of feature subset when all computed features have been selected. The search procedure can also stop when some threshold variables are reached. These can be e.g. the minimum number of features, the maximum number of iterations or the minimum value of the error rate. More complex procedures such as the restriction of the number of backtracking can also determine the stopping conditions. Feature subset search algorithms can also stop when subsequent addition or deletion of any feature does not produce a better subset.

Once the selection procedure of the best features is terminated, feature subset will be validated. This is generally done by comparing the classification performances using the full feature set and using the computed feature subset.

Fig. 9 shows the diagram of the method for selecting an optimized evaluation feature subset with the three major parts generating 56 combinations of evaluation features 58, evaluating 68 the combinations of evaluation features 58 with a reference set of patterns 52 and determining 76 (stopping criterion) the optimized evaluation feature subset 50. The classifying 30 (and result validation) is based on this optimized evaluation feature subset 50.

The feature selection principle is similar to the pattern classification task where a learning phase and a testing phase are considered. The task of selecting the most relevant features may also be divided in a training step and a testing step. Once the best feature subset (optimized evaluation feature subset 50) has been computed after a learning phase by means of a reference set of patterns 52, the validation (Classifying 30) may be done using another set of patterns according to the Classifying method 30 as depicted in Fig. 2, where another reference set of patterns 42 is used for a learning 40 step. Both methods may be combined, such that the Classifying 30 depicted in Fig. 2 is using the optimized evaluation feature subset 50 depicted in Fig. 9 for the Combination of Evaluation features 26 depicted in Fig. 2.

For the Learning 40 depicted in Fig. 2 a wrapper-based feature Selection method, e.g. a k-NN method, may be applied. Wrapper-based feature selection models are dependent evaluation criteria, as they use a classification algorithm for the evaluation of each feature subset. The feature subset generation may be done using a learning set (reference set of patterns 52) depicted in Fig. 9. The computed optimized evaluation feature subset 50 ($C_{sub}$) is then used for the result validation by means of a testing set (reference set of patterns 42) depicted in Fig. 2, which was not used during the feature subset selection process.

Concerning the classification of stripe images, the Nearest-Neighbor 1-NN may outperform the 3-NN and the NB methods. The same algorithm may be used for the wrapper-based selection and for the result validation process. Thus, in case of stripe image classification using wrapper-based methods, the 1-NN pattern-based classifier will be further considered.

This classifier leads to best classification results as far as the directional Fourier $P_{\theta1\theta2}$ and the adaptive features (01)-(20) are concerned. Hence, a feature selection approach based on the 1-NN classifier will improve the classification of the stripe patterns.

Filter-based feature selection schemes use the relation between the features and the classes to retrieve the most appropriate feature subset. Feature selection in case of supervised classification approaches can be accomplished on the basis of correlation between features. Different correlation measures may be used for the classification of datasets. It has shown that correlation-based methodology can lead to comparable results as a wrapper-based approach.

The rationale of correlation-based feature selection methods is that good feature subsets contain features highly correlated with the class, yet uncorrelated with each other. In case of a forward selection procedure, a feature subset with $N_{csub}$ features is said to be optimal if its heuristic merit which measures the degree of feature-feature and feature-class correlation for a given feature class $\Omega_\kappa \in \{\Omega_A, \Omega_{R,3D}, \Omega_{R,2D}\}$ is maximal.

A correlation-based feature selection process CFS may be used, for example, as presented by "Mark A. Hall, Correlation-based feature selection for machine learning, Ph.D. thesis, University of Waikato, New Zealand, 1999".

The equation of a merit $^{Ncsub\Omega k}M$ of a feature subset containing $N_{csub}$ features for a particular class label $\Omega_\kappa$ is (adapted to an inspection of free-form surfaces):

$$^{N_{csub}\Omega_\kappa}M = \frac{N_{csub}\overline{r}_{csub\Omega_\kappa}}{\sqrt{N_{csub} + N_{csub}(N_{csub} - 1)\overline{r}_{csub csub}}}$$

$$\overline{r}_{csub\Omega_\kappa} = \frac{1}{N_{csub}} \sum_{j=0}^{N_{csub}} r_{c^j_{sub}\Omega^j_\kappa}$$

$$\overline{r}_{csub csub} = \frac{1}{N_{csub} \cdot N_{csub}} \sum_{j1=0}^{N_{csub}} \sum_{j2=0}^{N_{csub}} r_{c^{j1}_{sub}c^{j2}_{sub}}$$

$r_{csub\Omega_\kappa}$ and $r_{csubcsub}$ are the average feature-class and the mean feature-feature correlation coefficients which measure the degree of dependence of one variable with another. These two coefficients may be defined as being the Pearson's correlation coefficient of two vectors. Its computation differs according to values of the vectors, i.e. if both are continuous or one of them is discrete.

Thus, the equations defining $r_{cjsub\Omega\kappa j}$ and $r_{cj1subcj2sub}$ differ:

$$r_{c^j_{sub}\Omega^j_\kappa} = \sum_{k=1}^{N_F} p(\Omega_\kappa) \cdot r_{c^j_{sub}\Omega^j_{\kappa,bi}}$$

and

$$r_{c^j_{sub}\Omega^j_{\kappa,bi}} = \frac{1}{N_F} \frac{\sum_{k=1}^{N_F} \Omega^j_{\kappa,bi}(k) \cdot c^j_{sub}(k)}{\sigma_{\Omega_{\kappa,bi}} \cdot \sigma_{c^j_{sub}}}$$

$$ r_{c^{j1}_{sub} c^{j2}_{sub}} = \frac{1}{N_F} \frac{\sum_{k=1}^{N_F} c^{j1}_{sub}(k) \cdot c^{j2}_{sub}(k)}{\sigma_{c^{j1}_{sub}} \sigma_{c^{j2}_{sub}}} $$

These equations define the feature-class and the feature-feature coefficients for a feature subset containing $N_{csub}$ features and for a particular class label $\Omega_\kappa$. $p(\Omega_\kappa)$ is the prior probability of the class $\Omega_\kappa$. The feature subset for the $N_{csub}$ features may be retrieved from the $N_F$ image patterns. $c^j_{sub}(k)$ is the $k^{th}$ value of the vector $c^j_{sub}(k = 1, .., N_F)$ whose class label is $\Omega_\kappa$. $\Omega^j_{\kappa,bi}$ is a binary vector whose values are 1 when the class of a feature $c^j_{sub}$ is $\Omega_\kappa$, and 0 otherwise.

The generating 56 combinations of evaluation features 58 as depicted in Fig. 9 may comprise an iterative feature selection process. A feature forward selection procedure with an amount of backtracking of e.g. 5 as the stopping criterion may be addressed. An iterative feature selection process may start with an empty initial feature subset.

The feature selection (evaluating 68 of Fig. 9) and the pattern classification (classifying of Fig. 9) may follow a 10-F cross-validation procedure.

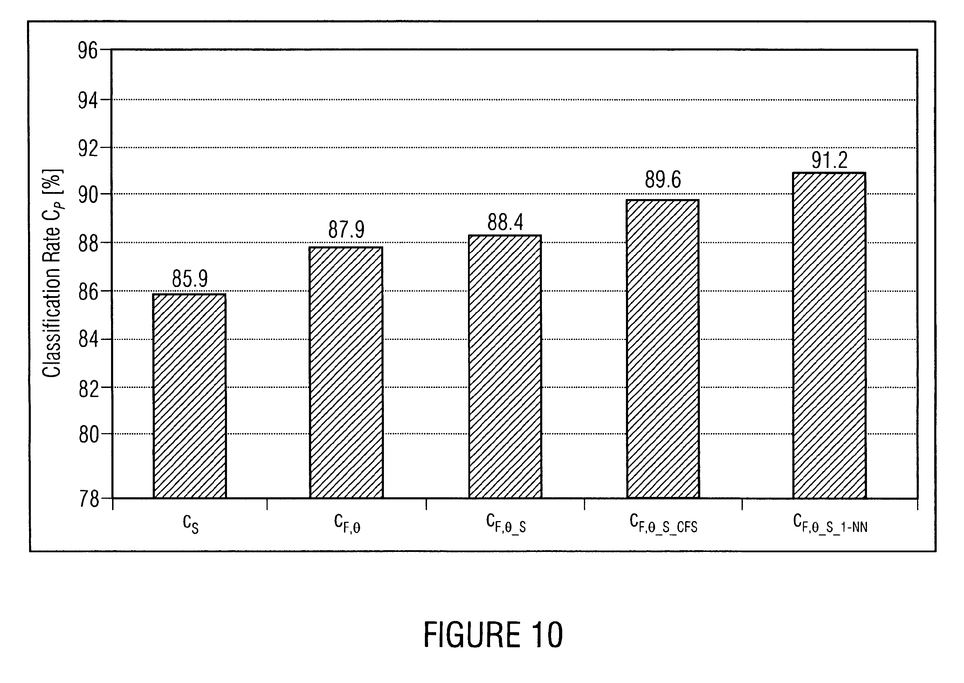

**Fig. 10** shows a diagram depicting detection (classification) rates 74 of different combinations of evaluation features 58 for a method for inspecting a free-form surface illuminated by a structured light according to an embodiment of the invention. Some of the combinations of evaluation features 58 (the two right feature sets in the diagram) were selected by a method for selecting an optimized evaluation feature subset for an inspection of free-form surfaces according to a further embodiment of the invention.

The feature set $c_S$ comprises the 20 adaptive features (01)-(20) described above. The feature set $c_{F,\theta}$ comprises the 10 Fourier directional features $P_{\theta1\theta2}$ as described above. The feature set $c_{F,\theta\_S}$ comprises a combination of the 10 Fourier directional features $P_{\theta1\theta2}$ and the 20 adaptive features (01)-(20). The feature set $c_{F,\theta\_S\_CFS}$ comprises an optimized evaluation feature subset selected from combinations of the 10 Fourier directional features $P_{\theta1\theta2}$ and the 20 adaptive features (01)-(20) by a CFS method. The feature set $c_{F,\theta\_S\_1-NN}$ comprises an optimized evaluation feature subset selected from combinations of the 10 Fourier directional features $P_{\theta1\theta2}$ and the 20 adaptive features (01)-(20) by a wrapper 1-NN method.

The 1-NN classifier is used, as this approach leads to best classification (detection) rates for both feature extraction methods. Also a 10-F classification approach may be considered, which gives similar results to a LoO procedure.

In the diagram of Fig. 10 fixed sizes of reference patterns are considered. The classification is applied to image sets $\Phi^{64^2}$. The main reason for using this feature set is that, as far as the automatic classification of the stripe patterns is concerned, an automatic segmentation procedure of the image depicting the disturbed stripe structures to interpret, is not addressed in the results depicted in Fig. 10. Hence, in terms of a fully automatic surface inspection process, it may be preferable to consider fixed sizes of images.

Furthermore, it has also shown that the best classification rate $C_P = 87.9$ % using textural approaches $c_{F,\theta}$ was reached by applying the directional Fourier features to the images with fixed sizes of set $\Phi^{64^2}$ (a 10-F procedure is considered). Concerning the adaptive features $c_S$, the best rate $C_P = 88.9$ % was obtained using the images with adapted sizes of set $\Phi^{ad1}$ (a 10-F procedure is considered). Next best rate with fixed images sizes, was $C_P = 85.9$ % with set $\Phi^{64^2}$ (a 10-F procedure is considered).

To simplify the notations, the adaptive feature vector $c_{S,g2wF,BR5}$ leading to a classification rate $C_P = 85.9$ % will be noticed $c_S$. The notation of feature vector $c_{F,\theta}$ leading to a rate of $C_P = 87.9$% will not be changed.

In case of the classification of image set $\Phi^{64^2}$, the directional Fourier features lead to slightly better rates than the adaptive features. It is however interesting to notice that the combination of both feature sets do not particularly improve the classification results, $C_P = 88.4$ % with $c_{F,\theta\_S}$ and $C_P = 87.9$ % with $c_{F,\theta}$.

Concerning the selection of the appropriate features, both filter-based and wrapper-based methods improve the detection rates. The 1-NN method even outperforms the CFS approach, $C_P = 91.2$% and $C_P = 89.6$ %. This result validates the method selecting an optimized evaluation feature subset 50 according to embodiments of the invention. Namely, that the 1-NN method is the most appropriate approach as far as the classification of vertical stripe structures is concerned.

A closer examination of which features are selected by the feature selection process has shown that in general the same groups of features are selected for each of the (10) runs of the feature selection process. A fourth of the selected features were selected more than 8 times, these features are: the stripe $c_S(01)$ (intensity bright), $c_S(06)$ (maximum distance dark), the fringe $c_S(13)$ (length bright), $c_S(19)$ (number of elements bright), $c_S(20)$ (number of elements dark) and the Fourier directional $c_{F,\theta}(05)$ and $c_{F,\theta}(06)$. More than a third of the whole 30 features have never been selected. The number of selected features after the 10 runs Nc,1-NN = 82 means that on average only 8.2 features are necessary to reach such results.

Therefore only a few features may be necessary for the characterization of the stripe patterns, so that classification rates of up to 91.2 % can be reached.

For the selection of the optimized evaluation feature subset 50 for the classification 30 of free-form surfaces it has shown that a wrapper-based 1-NN selection method outperforms a filter-based CFS approach. Hence, by means of a first combination of two appropriate feature sets, and the selection of the most relevant subset of features, an improvement of the detection rate 74 from $C_P = 85.9$ % to $C_P = 91.2$ % can be reached. In addition the selection process allows to reduce the number of relevant features (from 30 to less than 10 in one embodiment).

For both distortion types -1- and -2- as depicted in Fig. 6 the number of selected features proportionally increases with the distortion of the stripe structures in the patterns. Adapted fringe features are selected the more the bright stripes differ from a periodical and vertical structure. Indeed, such features were defined in the context of complex fringe structures interpretation.

Less features are selected when highly distorted stripe structures are involved. Without distortion, the average number of selected features is of approximately 10, and decreases to approximately 7 for stripe structures whose distortion corresponds to the type -1- and the type -2-. For highly distorted patterns, mainly the specific stripe features of the adaptive features (09)-(20) and the Fourier directional features $c_{F,\theta}(06)$ may be relevant for the classification process, In particular for the patterns corresponding to the distortion type -1-.

It can be observed that the pattern arrangement $\chi_2$ as depicted in Fig. 6 is more appropriate than pattern arrangement $\chi_1$ for the classification of free-form surfaces. In that case, the wrapper-based feature selection process leads to similar or better results as if the whole feature set is used. Then, according to the degree of distortion of the stripe pattern, a very low number of features is necessary to retrieve the best classification rates.

Embodiments of the invention providing a method for selecting an optimized evaluation feature subset reduce the dimensionality of the data and therefore allow learning algorithms to run faster and more efficiently. By this the inspection process is improved in terms of complexity reduction as far as the algorithmic procedure is concerned. Another important benefit is the decrease of the processing time.

Depending on certain implementation requirements of the inventive methods 2, 4, the inventive methods 2, 4 can be implemented in hardware or in software. The implementation can be performed using a digital storage medium, in particular a disc, DVD or a CD having electronical readable control signals stored thereon, which cooperate with a programmable computer system, such that the inventive methods 2, 4 are performed. Generally, the invention is, therefore, a computer program product with a program code stored on a machine readable carrier, the program code being operative for performing the inventive methods 2, 4 when the computer program product runs on a computer. In other words, the inventive methods 2, 4 are, therefore, a computer program having a program code for performing at least one of the inventive methods 2, 4 when the computer program runs on a computer.

**Claims**

1. Method (4) for selecting an optimized evaluation feature subset (50) for an inspecting of free-form surfaces illuminated by a structured light on the basis of a reference set of patterns (52), depicting surface areas of free-form objects, wherein each pattern of the reference set (52) is associated to a defective or non-defective reference state (54) of the respective surface area of the free-form objects, comprising:

    generating (56) a plurality of combinations of evaluation features (58), wherein each combination of evaluation features (58) comprises a first set of features (60) and a second set of features (62), wherein the first set of features (60) is selected from a first group of adaptive features (64) and wherein the second set of features (62) is selected from a second group of textural features (80), wherein the first group of adaptive features (64) comprises stripe-based features (82) and/or fringe-based features (102) and wherein the second group of textural features (80) comprises transform-based features (88), structural features (84) and/or statistical features (86);

    evaluating (68) each pixel or a subset of the pixels of the patterns of the reference set (52) with each combination of evaluation features (58) for obtaining an evaluated defective or non-defective state (70) of the respective surface areas;

    comparing (72) the evaluated defective or non-defective state (70) with the defective or non-defective reference state (54) for obtaining a detection rate (74) for each combination of evaluation features (58); and

    determining (76) the optimized evaluation feature subset (50) based on the detection rates (74).

2. The method (4) according to claim 1, wherein a maximum of the detection rates (74) of each combination of evaluation features (58) determines the optimized evaluation feature subset (50).

3. The method (4) according to claim 1 or claim 2, wherein each pixel or a subset of the pixels of the patterns of the reference set (52) is evaluated with each combination of evaluation features (58) until a stopping criterion is fulfilled, wherein the stopping criterion is fulfilled when all combinations of evaluation features (58) have been evaluated or when a threshold is reached.

4. The method (4) according to claim 3, wherein the threshold comprises a minimum number of features for the optimised evaluation feature subset (50), a maximum number of iterations for the evaluating (68), a minimum value for the detection rate (74), a restriction of the number of backtracking or a condition that no higher detection rate (74) is determined.

5. The method (4) according to one of the preceding claims, wherein the generating (56) a plurality of combinations of evaluation features (58) comprises a filter algorithm or a wrapper algorithm,
wherein the filter algorithm comprises a correlation-based algorithm,
wherein the wrapper algorithm comprises a Nearest-Neighbour algorithm or a Naive-Bayes algorithm.

6. The method (4) according to one of the preceding claims, wherein the evaluating (68) each pixel or a subset of the pixels of the patterns of the reference set (52) comprises a feature distance algorithm, an information gain algorithm or a feature dependency algorithm, which algorithms are adapted to evaluate the pixels or the subset of the pixels with the combinations of evaluation features (58) by using an independent criterion; or
wherein the evaluating (68) each pixel or a subset of the pixels of the patterns of the reference set (52) comprises a machine learning algorithm, which algorithm is adapted to evaluate the pixels or the subset of the pixels with the combinations of evaluation features (58) by using a dependent criterion.

7. Method (2) for inspecting a free-form surface (20) illuminated by a structured light (22), comprising:

   Illuminating (10) an area of the free-form surface (20) by the structured light (22);
   recording (12) an image (24) of the illuminated area of the free-form surface (20); and
   evaluating (14) each pixel or a subset of the pixels of the image (24) of the area of the free-form surface (20) with a combination of evaluation features (26) for obtaining a defective or non-defective state (28) of the surface area (20),

   wherein the combination of evaluation features (26) comprises a first set of features (60) and a second set of features (62), wherein the first set of features (60) is selected from a first group of adaptive features (64) and wherein the second set of features (62) is selected from a second group of textural features (80), wherein the first group of adaptive features (64) comprises stripe-based features (82) and/or fringe-based features (102) and wherein the second group of textural features (80) comprises transformed-based features (88), structural features (84) and/or statistical features (86).

8. The method (2) according to claim 7, wherein the evaluating (14) each pixel or a subset of the pixels of the image (24) of the area of the free-form surface (20) comprises:

   Classifying (30) the image (24) by assigning (38) a class (32) to the image (24) which class (32) is indicating the defective or non-defective state (28) of the surface area (20).

9. The method (2) according to claim 8, wherein the classifying (30) the image (24) comprises:

   extracting (34) information of the image (24) which is described by the combination of evaluation features (26) to an extracted information (36);
   assigning (38) the class (32) to the image (24) by using the extracted information (36); and

   wherein the assigning (38) of the class (32) to the image (24) is based on an assigning rule (40), which is derived from a reference set of patterns (42) depicting surface areas (20) of free-form objects, wherein each pattern of the reference set (42) is associated to a reference class ($\Omega$).

10. The method (2) according to claim 9, wherein the assigning (38) the class (32) to the image (24) comprises a filter algorithm or a wrapper algorithm,
wherein the filter algorithm comprises a correlation-based algorithm, wherein the wrapper algorithm comprises a Nearest-Neighbour algorithm or a Naive-Bayes algorithm;

wherein the assigning rule (40) comprises a stratified 10-fold cross validation algorithm or a leaving-one-out cross validation algorithm.

11. The method (2) according to claim 9 or claim 10, wherein the reference set of patterns (42) comprises patterns of adapted size or patterns of fixed size;
   wherein the reference class ($\Omega$) comprises a class of non-defective surfaces ($\Omega_A$), a class of two-dimensional defective surfaces ($\Omega_{R,2D}$) and/or a class of three-dimensional defective surfaces ($\Omega_{R,3D}$);
   wherein the reference class ($\Omega$) comprises a class of planar-shaped surfaces ($\Phi_0$) a class of surfaces shaped by a perspective distortion ($\Phi_1$) and/or a class of surfaces shaped by a cylindrical distortion ($\Phi_2$).

12. The method (2) according to claims 7-11, wherein the free-form surface (20) comprises a matt surface or a specular surface;
   wherein the structured light (22) comprises stripe structures, periodical structures or vertical structures of visible, non-coherent or coded light;
   wherein the the image (24) is recorded by using a line-scan camera or a matrix camera.

13. Method for an optimized inspection of a free-form surface, comprising:

   the method (4) for selecting an optimized evaluation feature subset (50) according to claims 1-6; and
   the method (2) for inspecting a free-form surface (20) illuminated by a structured light (22) according to claims 7-12, wherein the combination of evaluation features (26) corresponds to the optimized feature evaluation subset (50).

14. Computer program for performing the methods (2,4) according to one of the claims 1, 7 or 13, when the computer program runs on a computer.

15. Apparatus for selecting an optimised evaluation features subset (50) for an inspection of free-form surfaces illuminated by a structured light on the basis of a reference set of patterns (52) depicting surface areas of free-form objects, wherein each pattern of the reference set (52) is associated to a defective or non-defective reference state (54) of the respective surface area of the free-form objects, comprising:

   generating means for generating (56) a plurality of combinations of evaluation features wherein each combination of evaluation features comprise a first set of features and a second set of features, wherein the first set of features is selected from a first group of adaptive features and wherein the second set of features is selected from a second group of textural features, wherein the first group of adaptive features comprises stripe-based features and/or fringe based features and wherein the second group of textural features comprises transform-based features, structural features and/or statistical features;
   evaluating means for evaluating (68) each pixel or a subset of the pixels of the patterns of the reference set with each combination of evaluation features for obtaining an evaluated defective or non-defective state of the respective surface areas;
   comparing means for comparing (72) the evaluated defective or non-defective state with the defective or non-defective reference state for obtaining a detection rate for each combination of evaluation features; and
   determining means for determining (76) the optimised evaluation feature subset based on the detection rates.

16. Apparatus for inspecting a free-form surface illuminated by a structured light, comprising:

   illuminating means for illuminating (10) an area of the free-form surface by the structured light;
   recording means for recording (12) an image of the illuminated area of the free-form surface; and
   evaluating means for evaluating (14) each pixel or a subset of the pixels of the image of the area of the free-form surface with a combination of evaluation features for obtaining a defective or non-defective state of the surface area, wherein the combination of evaluation features comprises a first set of features and a second set of features, wherein the first set of features is selected from a first group of adaptive features and wherein the second set of features is selected from a second group of textural features, wherein the first group of adaptive features comprises stripe-based features and/or fringe based features and wherein the second group of textural features comprises transform-based features, structural features and/or statistical features.

F
pattern

features

c
feature
vector

classification

$\Omega_k$

class

testing

$\Phi$
reference set
of patterns

image
database

learning

# FIGURE 1

FIGURE 2

EP 2 177 898 A1

FIGURE 3A

Free-From Rough

Free-From Specular

300

302

FIGURE 3B

FIGURE 4 a1

FIGURE 4 b1

FIGURE 4 a2

FIGURE 4 b2

**FIGURE 5A**

504

# FIGURE 5B

FIGURE 6

EP 2 177 898 A1

| no disturbance | symmetrical deviation" | circular small-size | circular mid-size | circular huge-size | low contrast | vanishing |
|---|---|---|---|---|---|---|

Adapted sizes: image set $\Phi^{ad1}$

Fixed ROI sizes of 64 x 64: image set $\Phi^{64^2}$

Fixed ROI sizes of 128 x 128: image set $\Phi^{128^2}$

| $\Omega_A$ | $\Omega_A$ | $\Omega_A$ | $\Omega_{R,3D}$ | $\Omega_{R,3D}$ | $\Omega_{R,2D}$ | $\Omega_{R,2D}$ |
|---|---|---|---|---|---|---|

FIGURE 7

EP 2 177 898 A1

FIGURE 8

FIGURE 9

FIGURE 10

Europäisches
Patentamt

European
Patent Office

Office européen
des brevets

# EUROPEAN SEARCH REPORT

Application Number

EP 08 01 7978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAULIER Y, BOURENNANE, S: "An image content description technique for the inspection of specular objects" EURASIP JOURNAL ON ADVANCES IN SIGNAL PROCESSING, [Online] vol. 2008, no. 195263, 31 July 2008 (2008-07-31), pages 1-14, XP002526050 Retrieved from the Internet: URL:http://www.hindawi.com/GetArticle.aspx ?doi=10.1155/2008/195263> [retrieved on 2008-04-28] * the whole document * ----- | 1-16 | INV. G01N21/88 |
| A | CAULIER Y, ET AL: "New structured illumination technique for the inspection of high-reflective surfaces: Application for the detection of structural defects without any calibration procedures" EURASIP JOURNAL ON ADVANCES IN SIGNAL PROCESSING, [Online] vol. 2008, no. 237459, 29 November 2007 (2007-11-29), pages 1-14, XP002526051 Retrieved from the Internet: URL:http://www.hindawi.com/getarticle.aspx ?doi=10.1155/2008/237459> [retrieved on 2008-04-28] * the whole document * ----- | 1-16 | TECHNICAL FIELDS SEARCHED (IPC) G01N |
| A | SKYDAN O A, LALAOR M J, BURTON D R: "3D shape measurement of automotive glass by using a fringe reflection technique" MEASUREMENT AND SCIENCE TECHNOLOGY, vol. 18, 2007, pages 106-114, XP002526052 * the whole document * ----- | 1-16 | |

The present search report has been drawn up for all claims

| Place of search | Date of completion of the search | Examiner |
|---|---|---|
| Munich | 29 April 2009 | Croucher, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................
& : member of the same patent family, corresponding
document

EPO FORM 1503 03.82 (P04C01)

**EP 2 177 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006008840

**Non-patent literature cited in the description**

- **Ian H. Witten ; Eibe Frank.** *Data mining,* 2005
- **T.M. Cover ; P.E. Hart.** Nearest Neighbor Pattern Classification. *EIII Trans. On Information Theory,* 1967, vol. 13 (1), 21-27
- **R.O. Duda ; P.E. Hart.** Pattern classificatzion and scene analysis. Wiley, 1973
- Active vision and sensor fusion for inspection of metallic surfaces, Intelligent Robots and Computer Vision XVI, Algorithms, Techniques, Active Vision and Materials Handling. **F. Puente Leon ; J. Beyerer.** Proc. Of SPIE. 1997, vol. 3208, 394-405
- **Sören Kammel.** Deflektometrische Untersuchung spiegelnd reflektierender Freiformflächen. PhD Thesis, 2004
- **M. Tuceyran.** Texture Analysis. World Scientific Publishing Co, 1998, 207-248
- **Huang Zhi ; Rolf B. Johansson.** Interpretation and Classification of Fringe Patterns. *11th Int. Conference on Image, Speech and Signal Analysis (IAPR'1992),* August 1992, vol. 3, 105-108

- **Xide Li.** Wavelet Transform for Detection of Partial Fringe Patterns Induced by Defects in None Destructive Testing of Holographic Interferometry and Electronic Speckle Pattern Interferometry. *Journal of Optical Engineering,* October 2000, vol. 39, 2821-2827
- **Y. Chen ; M. Nixon ; D. Thomas.** Statistical geometrical features for texture classification. *Pattern Recognition,* 1995, vol. 28 (4), 537-552
- **Robert M. Haralick ; K. Shanmugam.** Its'hak Dinstein, Texture features for image classification. *IEEE Trans. on Systems, Man, and Cybernetics (SMC),* 1973, vol. 3 (6), 610-621
- **Michael Unser.** Sum and difference histograms for texture classification. *IEEE Trans. on Pattern Anal. and Machine Intell. (PAMI),* 1986, vol. 8 (1), 118-125